# EUROPÄISCHE PATENTANMELDUNG

(11) **EP 3 650 995 A1**
(43) Veröffentlichungstag der Anmeldung: **13.05.2020**
(21) Anmeldenummer: 19213071.4
(22) Anmeldetag: 01.07.2016
(51) Int. Cl.: G06F 3/01, G06F 3/0362, G06F 1/16, F16D 37/02, G04C 3/00

(54) **HAPTISCHE BEDIENEINRICHTUNG UND VERFAHREN**

(30) Priorität: 01.07.2015 DE 102015110633
(62) Teilanmeldung aus: 16742181.7
(71) Anmelder: Inventus Engineering GmbH, 6771 St. Anton i. M. (AT)
(72) Erfinder: Battlogg, Stefan, 6771 St. Anton i.M. (AT)
(74) Vertreter: BSB Patentanwälte Schütte & Engelen Partnerschaft mbB

(57) **Zusammenfassung**

Vorrichtung und Verfahren zum Bedienen von Fahrzeugen, wobei eine haptische Bedieneinrichtung (200) mit einer Dreheinheit (202) verwendet wird und auf einer Anzeigeeinheit (203) auswählbare Menüpunkte (225) angezeigt werden und wobei durch Drehen der Dreheinheit (202) ein Menüpunkt (225) selektiert wird. Die Dreheinheit (202) rastet beim Drehen an einer Anzahl von haptisch fühlbaren Rasterpunkten (226). Dabei wird die Anzahl der haptisch fühlbaren Rasterpunkte (226) dynamisch verändert. Die Anzeigeeinheit (203) ist drehfest mit dem Grundkörper (201) verbunden. Die Dreheinheit (202) ist gegenüber der Anzeigeeinheit (203) drehbar.

## Beschreibung

Die vorliegende Erfindung betrifft eine haptische Bedieneinrichtung mit einer magnetorheologischen Übertragungsvorrichtung und insbesondere einer magnetorheologische Kraft- oder Drehmomentübertragungseinrichtung, wobei die Übertragung zwischen einer ersten Komponente und mindestens einer sich relativ zu dieser bewegenden oder ruhenden zweiten Komponente durch die magnetorheologischen Eigenschaften einer sich zwischen den Komponenten befindenden Flüssigkeit verändert werden kann. Die erfindungsgemäße haptische Bedieneinrichtung kann auf vielfältigen technischen Gebieten eingesetzt werden, so z.B. zur Bedienung von technischen Einrichtungen wie Fahrzeugen oder industriellen Anlagen oder zur Bedienung von Waschmaschinen, Küchengeräten, Radios, HiFi-Anlagen oder anderen Geräten.

Magnetorheologische Fluide weisen beispielsweise in einem Öl verteilt feinste ferromagnetische Partikel wie beispielsweise Carbonyleisenpulver auf. In magnetorheologischen Flüssigkeiten werden kugelförmige Partikel mit einem herstellungsbedingten Durchmesser von 1 bis 10 Mikrometer verwendet, wobei die Partikelgröße nicht einheitlich ist. Wird ein solches magnetorheologisches Fluid mit einem Magnetfeld beaufschlagt, so verketten sich die Carbonyleisenpartikel des magnetorheologischen Fluides entlang der Magnetfeldlinien, sodass die rheologischen Eigenschaften des magnetorheologischen Fluides (MRF) abhängig von Form und Stärke des Magnetfeldes erheblich beeinflusst werden.

Mit der WO 2012/034697 A1 ist eine magnetorheologische Übertragungsvorrichtung bekannt geworden, die zwei koppelbare Komponenten aufweist, deren Kopplungsintensität beeinflussbar ist. Zur Beeinflussung der Kopplungsintensität ist ein Kanal mit einem magnetorheologischen Medium vorgesehen. Über ein Magnetfeld wird das magnetorheologische Medium in dem Kanal beeinflusst. In dem Kanal sind Drehkörper vorgesehen, an denen spitzwinklige und das magnetorheologische Medium enthaltende Bereiche vorgesehen sind. Der Kanal oder wenigstens ein Teil davon ist mit dem Magnetfeld der Magnetfelderzeugungseinrichtung beaufschlagbar ist, um die Partikel wahlweise zu verketten und mit dem Drehkörper zu verkeilen oder freizugeben. Diese magnetorheologische Übertragungsvorrichtung kann auch an einem Drehknopf zur Bedienung von technischen Geräten eingesetzt werden. Eine solche magnetorheologische Übertragungsvorrichtung funktioniert und erlaubt die Übertragung von recht hohen Kräften oder Momenten bei gleichzeitig relativ kleiner Bauform.

In der EP 1 168 622 A2 ist in Figur 1 ein elektronisch gesteuerter Flüssigkeitsdrehknopf als haptisches Bedienelement bekannt geworden, wobei ein dünner und mit magnetorheologischem Fluid gefüllter Scherspalt zwischen einem drehfesten weichmagnetischen Jochring und einem ebenfalls drehfesten weichmagnetischen Ring vorgesehen ist. In dem Scherspalt ist ein dünnwandiges und drehbares Stellrad angeordnet. In Abhängigkeit von einem auf den Scherspalt einwirkenden Magnetfeld wirkt ein entsprechendes Bremsmoment ein. Nachteilig daran ist der extrem großflächige dünne Scherspalt, der den feststehenden äußeren weichmagnetischen Ring außen und innen umgibt, sodass die Grundreibung aufgrund des enthaltenen Fluids (magnetohorheologische Flüssigkeit = Viskosität ähnlich Honig) sehr hoch ist. Außerdem wird das Stellrad durch die Form des drehfesten weichmagnetischen Rings vorgegeben, der Teil des Magnetkreises ist. Dadurch kann das Stellrad nicht aus beliebigen Materialien gefertigt werden. In Figur 2 der EP 1 168 622 A2 ist ein anderes Ausführungsbeispiel offenbart, bei dem das Stellrad als Rückschlusseisen dient und ein drehbarer Bestandteil des Magnetkreises ist. Das Stellrad umgibt vollständig eine feststehende Anordnung aus einem Jocheisen, Spulen und mehreren Jochringen. Das Magnetfeld verläuft radial durch den Scherspalt. Nachteilig ist der ebenfalls sehr großflächige dünne Scherspalt, der praktisch so groß ist, wie die Innenoberfläche des Stellrades. Außerdem ist das Stellrad Teil des Magnetkreises und kann somit nur aus bestimmten Materialien mit geforderten magnetischen Eigenschaften gefertigt sein. Figur 3 der EP 1 168 622 A2 offenbart ein weiteres Ausführungsbeispiel mit einem Drehsteller und einem geblechten Statorteil, welches aus weichmagnetischem Material besteht, eine Ankerwicklung trägt und ein radial verlaufendes Magnetfeld in einem magnetisch wirksamen Spalt zwischen einem radial inneren und radial äußeren Statorteil erzeugt. Beide Statorteile sind miteinander verbunden und bestehen aus einem weichmagnetischen Material. Im Spalt befindet sich ein ringförmiger und nichtmagnetischer Rotor, der über eine Welle mit einem glockenförmigen Bedienkörper verbunden ist. Ferner befindet sich im Spalt eine magnetorheologische Flüssigkeit. Der Rotor weist um die Welle herum einen glockenförmigen Rotorkörper auf, dessen ringförmige Wandung in den Spalt zwischen dem radial inneren und dem radial äußeren Statorteil eingreift. Auch bei diesem Ausführungsbeispiel ist der Scherfläche zwischen dem Rotorkörper und den Statorteilen sehr groß, wodurch ein sehr hohes Grundmoment erzeugt wird. Eine Bedienung mit einem Finger ist im täglichen Betrieb nicht möglich. Deshalb eignet sich ein haptisches Bedienelement nach der EP 1 168 622 A2 nicht zum Einsatz als feinfühliges haptisches Bedienelement.

Es hat sich bei vielen Versuchen herausgestellt, dass ein haptisches Bedienelement für z. B. Infotainment in Automobilen, Drehsteller auf Smart Devicen oder als Stellglied auf Geräten (z.B.: Oszilloskop) praktisch nur dann gewerblich als Serienprodukt einsetzbar ist, wenn das Grundmoment (Leerlaufmoment bei abgeschaltetem Magnetfeld; offstate Moment..) kleiner als 0,1 Newtonmeter (Nm) ist. Das gilt für typische Drehknopfdurchmesser von 30, 40 oder 50 mm. Wird ein besonders kleiner Drehknopfdurchmesser (z. B. < 5 oder 10 mm) verwendet, ist ein merklich geringeres Grundmoment als 0,2 Nm sehr vorteilhaft bzw. notwendig.

Ein Grundmoment von kleiner als 0,2 Nm ist bei einem Serienprodukt auf magnetorheologischer Basis nicht einfach realisierbar. Bremsen oder Kupplungen mit magnetorheologischem Fluid (MRF) lassen sich bei Steer by wire (großes Lenkrad bzw. großer Krafteinbringabstand) oder zum Bremsen von Vorgängen bei Maschinen einsetzen. Das Grundmoment liegt bei käuflich zu erwerbenden Produkten bei 0,4 bis 0,6 Nm, also um den Faktor 10 bis 40 über dem Stand der Technik von rein mechanischen Drehstellern. Das Maximalmoment dieser Einheiten liegt zwischen 5 und 12 Nm. Der wichtige Faktor zwischen Grundmoment und Maximalmoment (Arbeitsbereichsfaktor) liegt beim Stand der Technik somit im Bereich von 12 bis 20. Deshalb wurde bisher kein MRF Bedienknopf nach dem MRF Scherprinzip als Serienteil in Automobilen umgesetzt.

Haptische Bedienelemente, insbesondere Drehsteller in Fahrzeugen oder auf Smartdevicen, benötigen für einen vom Benutzer akzeptierten Serieneinsatz ein um ein vielfaches kleineres Grundmoment als beim Stand der Technik (MRF Bremsen nach dem Scherprinzip), diese liegen unter 0,2 Nm und besser kleiner 0,1 Nm und ideal unter 0,05 Nm. Finger sind hier sehr feinfühlig. Zum Vergleich liegt der haptische Arbeitsbereich (ein feiner Raster) eines bekannten und rein mechanischen Drehstellers (Benchmark bei Automobilen) mit einem Knopfdurchmesser von etwa 50 mm zwischen etwa 0,01 Nm (Grundmoment) und 0,05 Nm Maximalmoment (Rippelspitze). Ein konventioneller Infotainmentdrehknopf in der Mittelkonsole (Drehsteller mit z.B. 50 mm Drehknopfdurchmesser) mit einem Grundmoment von 0,06 Nm wird von vielen Automobilherstellern nicht akzeptiert (ist gewerblich nicht umsetzbar). Das notwenige Blockieren (mind. 5 Nm, z.B. Simulation eines Endanschlages oder der Position "P" beim Getriebewahlschalter) muss dann über z.B. einen zusätzlichen Sperrbolzen (elektrisch betätigter Hubmagnet) erzeugt werden.Somit ist es eine bevorzugte Aufgabe ein adaptives Bedienelement zu schaffen, dessen Bremsmoment bevorzugt zwischen 0,02 Nm (oder weniger) und 5 Nm (= Arbeitsbereich) im Millisekundenbereich einstellbar ist. Es wird somit ein Faktor im Bereich von 250 zwischen Grund- und Maximalmoment gefordert, was über 12x mehr wie beim Stand der Technik ist.

Besonders in der Autoindustrie soll die Anzahl der Bedienknöpfe im Fahrzeug reduziert werden, da die Anzahl aufgrund der Vielzahl der Funktionen stark zugenommen hat. Ziel ist es im Wesentlichen, dass nur die gerade notwendigen Informationen und Schaltmöglichkeiten angezeigt werden. Andererseits soll der Kunde nicht zu viel in den Menüs springen und blättern müssen, um notwendige Funktionen ausführen zu können. Deshalb muss der Benutzer ein haptisches Bedienelement ohne Krafteinsatz häufig bedienen können.

Ziel der Erfindung ist es deshalb, die vorteilhafte Variabilität und Flexibilität von haptischen Bedieneinrichtungen auf Basis magnetorhelogischer Medien so zu verbessern, dass diese für anspruchsvolle haptische Bedienelemente eingesetzt werden können.

Es soll eine haptische Bedieneinrichtung mit einer magnetorheologischen Übertragungsvorrichtung zur Verfügung gestellt werden, womit eine noch flexiblere Anwendung möglich ist.

Diese Aufgabe wird gelöst durch eine Vorrichtung mit den Merkmalen des Anspruchs 1 und durch ein Verfahren mit den Merkmalen des Anspruchs 9. Bevorzugte Weiterbildungen der erfindungsgemäßen haptischen Bedieneinrichtung sind Gegenstand der Unteransprüche. Weitere Vorteile und Merkmale der vorliegenden Erfindung ergeben sich aus der Beschreibung der Ausführungsbeispiele.

Eine erfindungsgemäße haptische Bedieneinrichtung ist mit einem Grundkörper und einer insbesondere mit einer Welle verbundenen Dreheinheit und einer magnetorheologischen Übertragungsvorrichtung mit wenigstens zwei koppelbaren Komponenten ausgerüstet. Die Kopplungsintensität der zwei koppelbaren Komponenten ist beeinflussbar. Zur Beeinflussung der Kopplungsintensitäten zwischen den koppelbaren Komponenten ist ein durch ein Magnetfeld beeinflussbares magnetorheologisches Medium mit magnetisch polarisierbaren Partikeln angeordnet. Es ist wenigstens eine Magnetfelderzeugungseinrichtung mit vorzugsweise wenigstens einer elektrischen Spule zu Erzeugung wenigstens eines Magnetfeldes vorgesehen, um mit dem Magnetfeld das magnetorheologische Medium zu beeinflussen. Die Magnetfelderzeugungseinrichtung ist dazu ausgebildet und eingerichtet mit ihrem Magnetfeld das magnetorheologische Medium zu beeinflussen. Der Grundkörper ist mit einer der beiden Komponenten und die Dreheinheit ist mit der anderen der beiden Komponenten gekoppelt. In dem Kanal ist wenigstens ein drehbares Übertragungselement als Magnetfeldkonzentrator angeordnet, welches bzw. welcher bei einer Drehbewegung wenigstens einer der koppelbaren Komponenten in Drehung versetzt wird. Das drehbare Übertragungselement kann als Drehkörper bezeichnet oder als Magnetfeldkonzentrator bezeichnet werden.

Der Magnetfeldkonzentrator konzentriert das Magnetfeld auf eine kleinere Fläche. Das Übertragungselement kann z. B. als Kugel oder Walze ausgebildet sein, ohne auf diese Formen beschränkt zu sein und konzentriert das Magnetfeld, d.h. zwischen den zwei relativ zueinander bewegten Komponenten wird das Magnetfeld verändert und von einer großen Fläche auf eine kleine Fläche (eine Übergangsfläche) konzentriert. Das Verhältnis dieser Flächen ist deutlich größer als 1 und insbesondere größer als 2, größer als 5 oder insbesondere größer als 10 oder sogar 20 oder 50. Im Prinzip ist dies das Verhältnis aus der Zylinderfläche von dem Innenring in Relation zu (dem Bereich) der Tangentenkante einer Walze oder zu einem Kugelpunkt multipliziert mit einer Anzahl der Übertragungselemente, insbesondere z.B. 15.

Das Übertragungselement konzentriert das Magnetfeld und bildet einen magnetischen Feld- oder Flussdichtenkonzentrator.

Das Übertragungselement ist weder mit der ersten Komponente noch mit der zweiten Komponente drehfest verbunden. Der Feldkonzentrator kann sich "willkürlich" zwischen den beiden Komponenten bewegen.

Eine solche erfindungsgemäße haptische Bedieneinrichtung hat viele Vorteile. Die haptische Bedieneinrichtung erlaubt ein sehr kleines Grundmoment, sodass eine einfache Drehung der Dreheinheit bzw. eines an der haptischen Bedieneinrichtung ausgebildeten Drehknopfes ermöglicht wird. Eine Bedienperson kann bequem mit dem kleinen Finger das Drehteil drehen. Es wird ein Grundmoment ermöglicht, welches kleiner 0,1 Nm und insbesondere kleiner 0,07 Nm und vorzugsweise kleiner 0,05 Nm liegt, sodass im täglichen Gebrauch auch bei vielfacher Benutzung eine bequeme Bedienung ermöglicht wird. Es ist nicht nötig, das Drehteil mit der ganzen Hand oder doch wenigstens zwei Fingern zu ergreifen, um das Drehteil (auch mehrmals nacheinander) zu drehen. Ein einfaches Berühren und Drehen auch mit nur einem Finger reicht in der Regel aus.

Gleichzeitig wird ein einfacher Aufbau ermöglicht und es werden nur wenig Teile verwendet. Durch den einfachen Aufbau, bei dem eine Drehmomentübertragung durch das magnetorhelogische Medium oder magnetorhelogische Fluid (MRF) wenigstens zu dem allergrößten Teil nur innerhalb des Kanals erfolgt, kann ein besonders geringes Grundmoment (Grundmoment = zur Drehung nötiges Moment bei abgeschalteter elektrischer Spule) erreicht werden.

Ein haptisches Bedienelement nach der EP 1 168 622 A2 hat demgegenüber den Nachteil, dass das Grundmoment sehr hoch ist, weil sehr viel Scherfläche benutzt wird. Das Verhältnis von aktiver Fläche zu Nutzfläche (Scherfläche) ist sehr ungünstig. Der Scherspalt muss technologisch bedingt klein sein, was wiederum die Reibung stark erhöht (Flüssigkeitsreibung). Der mit MRF gefüllte wirksame Scherspalt ist sehr groß.

Bei der vorliegenden Erfindung weist der Kanal eine große radiale Erstreckung (Kanalhöhe) auf, sodass die Grundreibung durch das MRF an sich bei abgeschaltetem oder geringem Magnetfeld aufgrund der großen radialen Erstreckung sehr gering ist. Die große radiale Erstreckung ergibt eine große Kanalfläche. Im Gegensatz dazu sind die Übertragungs-/Kontaktflächen aber sehr klein. Es tangieren nur Übertragungselemente (z. B. Rollen) an den bewegten und stehenden Teilen. Der Kanal ist sehr groß und hat eine niedrige Flüssigkeitsreibung.

Bei dem Aufbau nach der EP 1 168 622 A2 ist in dem sehr dünnen Spalt MRF enthalten, was aufgrund der Eisenpartikel und hohen Viskosität (ähnlich wie Schokoladensauce) wesentlich schlechtere Reibungswerte hat. Der Aufbau nach der EP 1 168 622 A2 ähnelt einem Gleitlager und der Aufbau hier einem Wälzlager. Ein Grundmoment von <0,1 Nm ist bei einem MRF-Aufbau nach dem Scherprinzip, das gewerblich als Serienprodukt einsetzbar sein soll, nicht möglich.

Insbesondere umfasst der Grundkörper eine Grundplatte und ein ringförmiges Aufnahmegehäuse mit einem darin angeordneten Aufnahmeraum, wobei der Aufnahmeraum radial nach außen durch einen sich im Wesentlichen in axialer Richtung erstreckenden äußeren Schenkel des Aufnahmegehäuses begrenzt wird. Vorzugsweise ist zentral an dem Aufnahmegehäuse die Welle drehbar aufgenommen. Insbesondere ist in dem Aufnahmeraum die elektrische Spule aufgenommen. Insbesondere schließt sich in einem radial inneren Bereich an das Aufnahmegehäuse und durch einen dünnen axialen Spalt getrennt ein mit der Welle drehfest verbundener Umlaufring an. Vorzugsweise ist der Kanal in dem Aufnahmeraum angeordnet und wird radial nach außen wenigstens im Wesentlichen oder vollständig durch den äußeren Schenkel und radial nach innen wenigstens im Wesentlichen oder vollständig durch den Umlaufring begrenzt, sodass ein wesentlicher Teil des Magnetfeldes der Magnetfelderzeugungseinrichtung durch das Aufnahmegehäuse, den Kanal und den Umlaufring verläuft.

Besonders bevorzugt umfasst das Aufnahmegehäuse in dem radial inneren Bereich einen inneren Schenkel, an den sich durch den dünnen axialen Spalt getrennt der Umlaufring anschließt. Insbesondere ist ein radialer Querschnitt des Aufnahmegehäuses etwa U-förmig gestaltet. Dann ist zwischen dem inneren und dem äußeren Schenkel der Aufnahmeraum umfasst. Vorzugsweise ist der äußere Schenkel länger als der innere Schenkel ausgebildet.

Insbesondere ist in einem zentralen Durchgang an dem inneren Schenkel die Welle aufgenommen. Vorzugsweise ist in dem Aufnahmeraum zwischen dem inneren und äußeren Schenkel die elektrische Spule aufgenommen.

Der innere Schenkel ist vorzugsweise durch den dünnen axialen Spalt von dem mit der Welle verbundenen Umlaufring getrennt.

Vorzugsweise besteht der Umlaufring aus einem weichmagnetischen Material und die Welle weist eine gehärtete Oberfläche oder eine entsprechend harte Oberflächenbeschichtung auf. Dadurch können Laufspuren des Lagers zuverlässig verhindert werden und es werden geeignete und gute magnetische Eigenschaften zur Verfügung gestellt.

Eine Ausgestaltung, bei der ein radialer Querschnitt des Aufnahmegehäuses etwa U-förmig ausgebildet ist und ein umlaufender innerer Schenkel (in axialer Richtung verlaufend) und ein dazu etwa konzentrisch verlaufender umlaufender äußerer Schenkel umfasst sind und wobei sich axial an (nur durch einen dünnen Spalt getrennt) den inneren Schenkel der mit der welle drehfest verbundene Umlaufring anschließt bietet sehr viele Vorteile. Es wird ein kompakter und kostengünstiger Aufbau ermöglicht, bei dem nur eine sehr geringe Grundreibung auftritt. Es wird ein Grundmoment kleiner und sogar deutlich 0,1 Nm ermöglicht. Damit können auch oft zu bedienende Drehknöpfe ausgerüstet werden, die nicht mit der ganzen Hand oder zwei Fingern fest gegriffen werden müssen, sondern auch Drehknöpfe, die mit einem Finger und nur einem einem sanften Druck bewegt werden können. Der Aufbau ermöglicht einen optimalen Magnetkreislauf, in dem die magnetischen Widerstände gering sind.

Vorzugsweise ist wenigstens eine Anzeigeeinheit zugeordnet. Vorzugsweise umgibt die Dreheinheit eine Anzeigeeinheit wenigstens abschnittsweise.

Vorzugsweise ist an dem Grundkörper und/oder der Dreheinheit wenigstens ein Betätigungssensor zur Erfassung einer axialen Betätigungskraft und/oder eines axialen Betätigungswegs angeordnet.

Die angeführten haptischen Bedieneinrichtungen haben viele Vorteile. Eine haptische Bedieneinrichtung, bei der die Dreheinheit eine Anzeigeeinheit wenigstens abschnittsweise oder auch vollständig umgibt, ist sehr vorteilhaft, da der Benutzer insbesondere direkt im Zentrum der Dreheinheit die Anzeigeeinheit im Blick hat. Dadurch kann er beim Drehen der Dreheinheit die sich ändernde Anzeige der Anzeigeeinheit beobachten und muss seinen Blick nicht abschweifen lassen, um zu verfolgen, welche Auswirkungen das Drehen der Dreheinheit auf die technische Einrichtung wie insbesondere ein Fahrzeug und besonders bevorzugt ein Kraftfahrzeug hat. Der Benutzer kann auch ohne zu der Bedieneinrichtung hinzusehen die Dreheinheit drehen und die Dreheinheit gegebenenfalls ohne Sichtkontakt bedienen und betätigen. Er hat aber jederzeit die Möglichkeit sich durch einen kurzen Blick zu vergewissern, in welcher Position sich die Dreheinheit gerade befindet bzw. was auf der Anzeigeeinheit der haptischen Bedieneinrichtung gerade dargestellt wird. Ein erheblicher weiterer Vorteil ist, dass der Benutzer mit seiner Bedienungshand ein dahinter liegendes Anzeigefeld teilweise abdecken kann, während regelmäßig die von der Dreheinheit umschlossene Anzeigefläche der Anzeigeeinheit dem Blick des Benutzers dennoch frei zugänglich ist.

Die erfindungsgemäße haptische Bedieneinrichtung ermöglicht es bei Einsatz z. B. in einem Kraftfahrzeug, dass nach dem Startvorgang das Startmenü (OFF- Infotainment-Zündung-Start) ausgeblendet wird, da dieses ja nicht mehr benötigt wird, solange das Auto fährt. Es ist sogar nicht zulässig, bei eingelegtem Gang das Fahrzeug abzuschalten oder zu starten.

Ein Wunsch ist es z. B., dass bei selbstfahrenden Fahrzeugen der GearShifter während dem "selber Fahren" verschwindet oder die Gangschaltung usw. ausgeblendet wird. Auch hier kann die Bedienung mit der haptischen Bedieneinrichtung nun dynamisch (adaptiv) der Situation angepasst werden. Statt der Gangschaltung kann das Entertainment angezeigt werden oder z. B. Parameter, die für das Selbstfahren relevant sind, wie z. B. Abstand, Ansprechverhalten der Sensoren etc.

Bei selbstfahrenden Fahrzeugen oder beim autonomen Fahren kann es problematisch bzw. gefährlich sein, wenn z. B. das Fahrzeug mit dem Fahrer als Passagier automatisch einparkt und hier der Getriebewählhebel für die Gangschaltung mechanisch bedingt in der zuletzt gewählten Position verbleibt (z.B. "D"), obwohl das Fahrzeug im Retourgang ist. Ein Eingriff des Fahrers ist hier nicht mehr möglich, da die angezeigte Funktion nicht mit der ausgeführten Funktion übereinstimmt, was den Fahrer verwirren kann. Dies gilt auch für das autonome bzw. beim oder für das Selbstfahren notwendige Einschalten des Lichts (Drehschalter), Scheibenwischer, Gaspedal, Bremspedal oder anderer Systeme. Alle Schaltelemente deshalb mit Stellmotoren aktiv auszuführen ist viel zu teuer. Die Erfindung stellt Abhilfe zur Verfügung, da beim Abschalten eines Fahrzeugs die Gangschaltung automatisch in die Parkposition "P" überführt werden kann. Die Dreheinheit kann hingegen in der Stellung verbleiben, in der sie sich beim Abschalten befindet. Beim nächsten Start wird die aktuelle Position als "P" interpretiert.

Bei Autos ist es wegen der Konzentration auf die Fahrbahn auch notwendig, dass bestimmte Bedienelement quasi "ohne Hinsehen (also "blind") betätigt werden können. Ein haptisches Feedback hilft hierbei zusätzlich.

Besonders bevorzugt ist die Anzeigeeinheit dazu ausgebildet, ein für eine Position der Dreheinheit charakteristisches und insbesondere grafisches Symbol anzuzeigen. Es ist möglich, dass die Anzeigeeinheit einen Betriebszustand der Dreheinheit und/oder des zu bedienenden Geräts wie eines Fahrzeugs oder Kraftfahrzeugs anzeigt. Möglich und bevorzugt ist es, dass der Betriebszustand über ein grafisches Symbol repräsentiert wird.

In allen Fällen und Ausgestaltungen kann die Dreheinheit auch als Bedieneinheit bezeichnet werden.

Ein erheblicher Vorteil einer haptischen Bedieneinrichtung, bei der ein Betätigungssensor zur Erfassung einer axialen Betätigung angeordnet ist, ist, dass die haptische Bedieneinrichtung nicht nur durch Drehen der Dreheinheit betätigt werden kann, sondern auch auf axiale Betätigungskräfte reagieren kann. In derartigen Ausgestaltungen mit einem Betätigungssensor ist der Betätigungssensor insbesondere an dem Grundkörper und/oder der Dreheinheit vorgesehen und besonders bevorzugt befestigt. Der Betätigungssensor kann eine axiale Bewegung der Dreheinheit relativ zu dem Grundkörper erfassen.

In besonders bevorzugten Ausgestaltungen weist eine haptische Bedieneinrichtung eine Anzeigeeinheit an der Dreheinheit und wenigstens einen Betätigungssensor zur Erfassung einer axialen Betätigungskraft auf.

Vorzugsweise ist die Anzeigeeinheit drehfest mit dem Grundkörper verbunden und die Dreheinheit ist relativ zu der Anzeigeeinheit drehbar. Eine solche Ausgestaltung hat den Vorteil, dass bei einer Drehung der Dreheinheit eine Anzeige auf der Anzeigeeinheit ihren Winkel nicht ändert. Dadurch bleibt für den Benutzer die Anzeige auf der Anzeigeeinheit unverändert ablesbar. Es ist aber ebenso möglich, dass die Anzeigeeinheit drehfest mit der Dreheinheit verbunden ist und zusammen mit der Dreheinheit gegenüber dem Grundkörper drehbar ist. Bei einer solchen Ausgestaltung ändert sich der Blickwinkel für den Benutzer nicht oder nur wenig, wenn er sich wenigstens teilweise zusammen mit der Dreheinheit dreht.

In bevorzugten Weiterbildungen ist wenigstens ein als Winkelsensor dienender Sensor vorgesehen, mit dem eine Winkelveränderung zwischen der Dreheinheit und dem Grundkörper erfassbar ist. Dabei kann der Sensor bzw. Winkelsensor relative Winkelveränderungen detektieren. Möglich ist es aber auch, dass der Sensor bzw. Winkelsensor einen absoluten Winkel zwischen der Dreheinheit und dem Grundkörper erfasst. Möglich ist es auch, dass der Sensor bzw. Winkelsensor beispielsweise einen Winkel zwischen 0 und 360° absolut erfasst, aber nach einer vollständigen Umdrehung wieder zurückgesetzt wird, sodass bei einer fortlaufenden Drehung immer Winkel zwischen 0 und 360° erfasst werden.

Der Sensor bzw. als Winkelsensor dienende Sensor umfasst vorzugsweise wenigstens zwei Sensorteile, wobei insbesondere ein Sensorteil mit der Dreheinheit und das andere Sensorteil mit dem Grundkörper verbunden ist. Beispielsweise kann ein Sensorteil als Impulsgeber, Maßband, Maßstab oder dergleichen ausgebildet sein und das andere Sensorteil bzw. das zweite Sensorteil kann als Sensor bzw. Detektor dienen und eine Relativbewegung des ersten Sensorteils erfassen.

In bevorzugten Weiterbildungen ist der Sensor bzw. Winkelsensor dazu ausgebildet, eine absolute Winkelposition zwischen der Dreheinheit und dem Grundkörper zu erfassen.

Vorzugsweise ist eine Drehrichtungserkennung möglich. Vorzugsweise ist eine hohe Winkelauflösung möglich. Je feiner die Winkelauflösung ist, desto früher kann erkannt (oder gemutmaßt) werden, was der Bediener will (Drehrichtungsumkehr, feiner justieren). Dementsprechend kann die Steuerungseinrichtung (Elektronik/Software) reagieren. Ein Hallgeber (EP 1 168 622 A2) ist dazu in der Regel viel zu ungenau, da nur ein paar hundert "counts/revolution" möglich sind. Der Sensor bzw. Winkelsensor ist vorzugsweise dazu ausgebildet eine Winkelauflösung von 0,2° und insbesondere wenigstens 0,1° oder 0,05° oder besser zu ermöglichen. Winkelauflösungen von über 100.000 "counts/revolution" (besser als etwa 1/300 Grad) sind erstrebenswert. Mit einer Winkelauflösung besser als 0,2° oder 0,1° kann aus kleinsten Bewegungen ein Bewegungsmuster abgeleitet werden.

Bei niedrigen Sensorauflösungen kann das "Bedienelement" bzw. die Dreheinheit bzw. der Drehknopf gefühlt "kleben" bleiben (ein hohes Moment wird zum Betätigen benötigt), was sich haptisch sehr unangenehm anfühlt und damit sehr nachteilig ist. Dann muss bei z.B. einer Drehrichtungsumkehr an einem Endanschlag zunächst ein hohes Drehmoment aufgebracht warden, obwohl der Benutzer gegenläufig drehen will und somit eine Freigabe erfolgen kann. Nur muss die Steuerungseinrichtung zunächst "mitbekommen", dass in die Gegenrichtung gedreht wird, wozu das Bedienelement mindestens einen Rasterschritt bewegt werden muss. Dabei hilft eine hohe Winkelauflösung erheblich.

Besonders bevorzugt bildet der (sichtbare) Teil des Drehknopfes (sichtbare Teil der Dreheinheit) nicht einen Teil des Magnetkreises. Besonders bevorzugt kann der sichtbare Teil des Drehknopfes nach Belieben ausgeführt werden, so kann der Drehknopf verchromt oder aus Plastik, Glas sein oder beledert werden etc., da der Drehknopf ein "Designelement" ist. Dies betrifft auch die Montagetauglichkeit (keine Schrauben sichtbar; Abdecken der Montagebohrung...).

Vorzugsweise sind die Übertragungselemente bzw. Drehkörper (Laufrollen) stirnseitig abgerundet oder bombiert, damit diese axial nur eine Punktberührung mit der Grundplatte bzw. dem Deckel haben. Dadurch wird die Grundreibung und somit das Grundmoment erheblich reduziert.

Auf einen Kontaktring kann verzichtet werden.

Vorzugsweise ist die Welle magnetisch leitend, wodurch Baugröße, Gewicht und Kosten reduziert warden. Vorzugsweise besteht die Welle aus einem niederlegierten Stahl wie z.B. S235. Damit die darauf laufende Dichtung wenig Reibung produziert und die Welle nicht beschädigt (Laufrille), ist die Welle vorzugsweise hartverchromt.

Der Umlaufring besteht vorzugsweise aus magnetisch gut leitendem bzw. weichmagnetischem Stahl und ist mit der Welle drehfest verbunden, insbesondere verpresst.

Der Bedienkopf bzw. die Dreheinheit ist vorzugsweise über ein Momentenübertragungselement wie z. B. einen Vierkant mit Schlitz mit der Welle verbunden. Der Bedienkopf bzw. die Dreheinheit wird durch das Momentenübertragungselement (z. B. Verschraubung über eine Senkkopfschraube) spielfrei verspannt.

In bevorzugten Weiterbildungen und Ausgestaltungen ist wenigstens eine Steuereinrichtung vorgesehen, wobei die Steuereinrichtung dazu geeignet und ausgebildet ist, die Magnetfelderzeugungseinrichtung dynamisch zu steuern. Vorzugsweise wird das Magnetfeld der Magnetfelderzeugungseinrichtung dynamisch in Abhängigkeit von einem Drehwinkel erzeugt, um ein dynamisches bzw. adaptives und winkelabhängiges haptisches Raster zur Verfügung zu stellen. Dabei ist es besonders bevorzugt, dass die haptische Bedieneinrichtung die Steuereinrichtung umfasst. Der Drehwinkel kann aus einer relativen oder absoluten Winkelposition abgeleitet werden. Möglich ist es auch, dass als Drehwinkel eine Winkelveränderung verwendet wird.

Derartige Ausgestaltungen sind sehr vorteilhaft, da über einen oder mehrere Winkelbereiche dynamisch Rasterpunkte zur Verfügung gestellt werden können, an denen die Dreheinheit praktisch einrastet. Möglich ist es auch, dass eine dynamische Erzeugung von Endanschlägen erfolgt, bei denen ab einem bestimmten Drehwinkel in die eine oder die andere Drehrichtung das zur Weiterdrehung erforderliche Drehmoment erheblich erhöht wird.

Vorzugsweise ist eine Steuereinrichtung vorgesehen bzw. die Steuereinrichtung dazu ausgebildet, in Abhängigkeit von einem Signal des Sensors bzw. Winkelsensors eine Darstellung eines Inhalts der Anzeigeeinrichtung entsprechend gegenläufig zu drehen. Eine solche Ausgestaltung ist insbesondere bei einer mitdrehenden Anzeigeeinheit vorteilhaft, da die Ausrichtung des dargestellten Inhalts im Wesentlichen unverändert gelassen wird. Dazu kann die Darstellung des Inhalts der Anzeigeeinheit genau um den gleichen gegenläufigen Betrag gedreht werden, den die Dreheinheit gedreht wird. Möglich ist es auch, dass die gegenläufige Drehung nur zu einem gewissen Anteil erfolgt. In diesen Ausgestaltungen kann bei einer Drehung der Dreheinheit der dargestellte Inhalt auf der Anzeigeeinheit im Wesentlichen oder sogar vollständig unverändert bleiben.

Der Inhalt der Anzeigeeinheit kann auch entsprechend der Blickposition des Bedieners verändert werden. Wird die Dreheinheit bzw. das Bedienelement z. B. in einem Kraftfahrzeug vom Fahrer bedient, richtet sich der Anzeigeinhalt bzw. der Winkel des Anzeigeinhaltes zum Fahrer hin aus (z. B. in 8 Uhr Position). Wird das Bedienelement vom Beifahrer betätigt, richtet sich der Anzeigeinhalt dementsprechend aus, d. h. z. B. in die 4 Uhr Position. Damit eingehend passt sich auch der haptische Raster bzw. passen sich die Rasterpositionen an.

Das haptische Raster kann dabei auch noch das haptische Moment variieren. Dies ist deshalb von Vorteil, weil der Fahrer das Bedienelement mit der rechten Hand und der Beifahrer mit der linken Hand bedienen werden. Bei den meisten Personen unterscheidet sich das Gefühl in den Händen, dem kann entgegengewirkt werden. Somit kann das Raster bzw. das Rastmoment bzw. der Rastmomentenverlauf über den Drehwinkel individuell an den Bediener angepasst werden.

Das Menü kann ganz anders sein, wenn z. B. Kinder drehen (diese werden über Schlüssel, Fingerabdruck im Deckel, Smartphone, Smartwatch erkannt). Hier kann dann nur eine eingeschränkte Bedienung möglich sein (z. B. keine heißen Temperaturen, Maschinen: keine hohen Drehzahlen...) oder feinfühliger - anderer Raster.

Bei Maschinen in Firmen, wie z. B. Bearbeitungsmaschinen oder bei Kopierern kann sich das Menü und das Raster entsprechend dem Bediener ändern. Es kann auch eine Warnung über den haptischen Knopf erfolgen, was z. B. besonders bei neuem Bedienpersonal Fehlbedienungen verhindern kann.

Vorzugsweise wird wenigstens ein separates Kontaktelement zwischen den beiden Komponenten angeordnet. Ein solches Kontaktelement ist vorzugsweise als Kontaktring ausgeführt und dient insbesondere als Reibring und kann beispielsweise als O-Ring ausgeführt sein. Der Reibring dient als Drehring und ist vorzugsweise wenigstens in zeitweisem Kontakt mit wenigstens einer Komponente. Das Kontaktelement kann insbesondere einen runden aber vorzugsweise auch einen flachen, abgeflachten oder auch rechteckigen Querschnitt aufweisen.

Durch ein derartiges Kontaktelement oder einen derartigen Kontaktring oder Reibring kann ein zuverlässiger Kontakt zwischen den beiden Komponenten bzw. ein abrollender Kontakt auf einer der Komponenten gewährleistet werden. Besonders bevorzugt ist der Kontaktring elastisch ausgebildet und kann beispielsweise aus einem Gummimaterial oder aus einem gummiartigen Material hergestellt oder gebildet werden.

Besonders bevorzugt ist zwischen den beiden Komponenten ein Kanal ausgebildet und in dem Kanal ist besonders bevorzugt wenigstens eine Mehrzahl an Drehkörpern vorgesehen.

Besonders bevorzugt ist das Kontaktelement oder der Kontaktring bzw. wenigstens ein Kontaktring bzw. Reibring oder Reibelement in einem Zwischenraum bzw. Innenraum zwischen den beiden Komponenten angeordnet. Insbesondere ist das Kontaktelement in dem Kanal zwischen den beiden Komponenten angeordnet bzw. befestigt. Beispielsweise kann das Kontaktelement oder der Kontaktring in einer umlaufenden Nut an einer der beiden Komponenten angeordnet sein. Möglich ist es auch, dass an beiden Komponenten jeweils ein Kontaktelement bzw. ein Kontaktring vorgesehen ist. Besonders bevorzugt ist wenigstens ein Drehkörper in Kontakt mit wenigstens einem Kontaktelement/Kontaktring.

Möglich ist es auch, dass wenigstens ein Drehkörper mit wenigstens einem Kontaktelement oder Kontaktring ausgerüstet ist. Beispielsweise können alle oder doch im Wesentlichen alle Drehkörper jeweils mit einem Kontaktelement oder Kontaktring versehen sein. Der Kontaktring kann jede beliebige Form haben, wie z. B. ein Quadring, Rechteckring, ohne darauf beschränkt zu sein.

Die Kontaktelemente/Kontaktringe zwischen den Komponenten und/oder den Drehkörpern und den Komponenten sorgen für einen zuverlässigen Kontakt zwischen dem Kontaktelement/Kontaktring und den beiden Komponenten, sodass dafür gesorgt wird, dass bei einer Relativdrehung der beiden Komponenten gegeneinander sich der Drehkörper wenigstens den Großteil der Zeit mit dreht.

Eine solche Ausgestaltung ist besonders vorteilhaft, wenn der Keileffekt zur Verkeilung von magnetorheologischen Partikeln ausgenutzt werden soll.

Eine Ausgestaltung ohne den Einsatz von (flexiblen) Kontaktelementen oder Kontaktringen ermöglicht eine noch geringere Grundreibung und ist deshalb besonders bevorzugt.

Vorzugsweise umfasst der Grundkörper eine Grundplatte und ein Aufnahmegehäuse und an dem Aufnahmegehäuse ist eine Welle drehbar aufgenommen. Das magnetorheologische Medium ist vorzugsweise zwischen dem Grundkörper und der Welle aufgenommen. Beispielsweise kann das magnetorheologische Medium in einem Innenraum des Aufnahmegehäuses aufgenommen sein.

Vorzugsweise ist die Dreheinheit mit der Welle drehfest verbunden. Die Verbindung kann über Kraftschluss und/oder Formschluss erfolgen.

In vorteilhaften Ausgestaltungen ist die Welle an einem Ende an der Grundplatte drehbar abgestützt. Insbesondere ist die Welle federnd mit einem Ende an der Grundplatte abgestützt. Dadurch kann eine Vorbelastung der Welle in eine definierte Position erreicht werden. Vorzugsweise weisen der Grundkörper und die Welle benachbart zu der Grundplatte jeweils eine umlaufende Lauffläche für die Drehkörper auf. Die Lauffläche bzw. die Laufflächen können auf einer zylindrischen, konvexen oder konkaven oder auch kegelförmigen Umlauffläche vorgesehen sein.

Vorzugsweise weist wenigstens eine Lauffläche wenigstens eine umlaufende Nut für die Drehkörper und/oder für wenigstens einen Kontaktelement oder wenigstens einen Kontaktring auf. Dadurch wird sichergestellt, dass der Kontaktring bzw. die Drehkörper eine definierte Position einnehmen.

In vorteilhaften Ausgestaltungen ist die Lauffläche der Welle an einem Umlaufring mit vergrößertem Durchmesser ausgebildet. In bevorzugten Weiterbildungen ist in dem Aufnahmegehäuse ein insbesondere ringförmiger Aufnahmeraum ausgebildet, in dem eine elektrische Spule als Magnetfelderzeugungseinrichtung angeordnet ist. In allen Ausgestaltungen kann die elektrische Spule auch an anderen Orten oder an oder in andersförmigen Ausnehmungen angeordnet sein.

Vorzugsweise ist die elektrische Spule im Wesentlichen axial benachbart zu den Drehkörpern angeordnet. Dadurch kann sichergestellt werden, dass das von der elektrischen Spule erzeugte Magnetfeld in hohem Maße auf die Drehkörper bzw. den Kanal und das darin enthaltene magnetorheologische Medium einwirkt.

Vorzugsweise ist der Umlaufring an einer Stirnfläche durch einen Spalt von einer Stirnfläche des Aufnahmegehäuses getrennt. In dem Spalt ist ein freier axialer Abstand vorzugsweise erheblich geringer als ein freier radialer Abstand an dem Kanal. Der freie radiale Abstand an dem Kanal ergibt sich aus dem radialen Abstand der beiden Komponenten zueinander und insbesondere aus dem freien radialen Abstand des Umlaufrings von der Stirnfläche bzw. Lauffläche in dem Aufnahmegehäuse. Insbesondere ist die Stirnfläche eine Axialfläche, kann aber auch Teil einer Kegelmantelfläche sein. Vorzugsweise ist ein Verhältnis des freien axialen Abstandes zu dem freien radialen Abstand kleiner als 1 zu 2 und insbesondere kleiner als 1 zu 5 und vorzugsweise kleiner als 1 zu 10.

In bevorzugten Ausgestaltungen bestehen das Aufnahmegehäuse und der Umlaufring im Wesentlichen oder vollständig aus einem besser magnetisch leitenden Material als die Grundplatte. Dadurch kann ein effektiver Fluss des Magnetfeldes sichergestellt werden.

Vorzugsweise erfasst der Betätigungssensor einen Abstand oder ein Maß für einen Abstand zwischen dem Grundkörper und der Dreheinheit.

In allen Ausgestaltungen ist es bevorzugt, dass ein freier Abstand zwischen dem Drehkörper und der Komponente beziehungsweise wenigstens einer Komponente wenigstens doppelt so groß ist wie ein typischer mittlerer Durchmesser der magnetisch polarisierbaren Partikel in dem magnetorheologischen Medium. Vorzugsweise ist zwischen dem Drehkörper und wenigstens einer Komponente wenigstens ein das magnetorheologische Medium enthaltender Bereich vorgesehen, der mit dem Magnetfeld der Magnetfelderzeugungseinrichtung beaufschlagbar ist, um die Partikel wahlweise zu verketten und/oder mit dem Drehkörper zu verkeilen und/oder freizugeben.

Der das magnetorheologische Medium enthaltende Bereich an dem die Partikel wahlweise verketten und/oder mit dem Drehkörper verkeilen ist im aktivierten Zustand insbesondere spitzwinkelig ausgebildet.

Möglich ist es auch, dass in dem Kanal ohne den Einsatz von Drehkörpern eine Verkettung der magnetorheologischen Partikel erfolgt.

Werden Drehkörper eingesetzt, dann verjüngt sich der insbesondere spitzwinklige Bereich zwischen dem Drehkörper und einer Komponente vorzugsweise in Richtung der Relativbewegung der Komponente relativ zu dem Drehkörper.

Insbesondere sind die beiden Komponenten wahlweise und gesteuert miteinander koppelbar.

Unter dem Begriff Kopplungsintensität werden im Sinne dieser Anmeldung die Kopplungskraft und/oder das Kopplungsmoment zwischen den beiden Komponenten verstanden. Wird z.B. eine lineare Kraftübertragung gewünscht, so entspricht die Kopplungsintensität der Kopplungskraft. Wenn ein Drehmoment übertragen werden soll, wird mit der Kopplungsintensität das Kopplungsmoment gemeint.

Vorzugsweise ist durch das Feld die Viskosität des magnetorheologischen Mediums veränderbar, wodurch die notwendige Verdrängungsarbeit zur Relativbewegung der relativ zueinander bewegbaren Komponenten und/oder Drehkörper beeinflussbar ist.

Unter Verdrängungsarbeit wird auch die Verdrängungskraft verstanden, die zur Verdrängung des Mediums bei einer Relativbewegung nötig ist.

Ein erheblicher und überraschender Vorteil der eingesetzten magnetorheologischen Übertragungsvorrichtung resultiert aus der erheblich verstärkten Wirkung des Magnetfeldes der Magnetfelderzeugungseinrichtung in dem Kanal. Der spitzwinklige und das Medium enthaltende Bereich wirkt als Hebel und somit quasi wie eine starke mechanische Hebelübersetzung, wobei der Hebel die Wirkung des Magnetfeldes um ein Mehrfaches erheblich verstärkt. Dadurch kann entweder die Feldstärke der Magnetfelderzeugungseinrichtung bei gleichbleibender Wirkung reduziert werden oder aber der Effekt des Magnetfeldes wird bei gleichbleibender Feldstärke verstärkt oder es wird sogar die Wirkung bei reduzierter Feldstärke deutlich erhöht. Durch den spitzwinkligen und das Medium enthaltenden Bereich wird die Wirkung insbesondere um ein Mehrfaches erhöht, wenn das Magnetfeld auf das Medium einwirkt. Insbesondere wirkt das Magnetfeld wenigstens zeitweise auf den spitzwinkligen und das magnetorheologische Medium enthaltenden bzw. sich bildenden Bereich ein.

Dadurch, dass der Drehkörper mit einem erheblichen freien Abstand gegenüber der wenigstens einen Komponente angeordnet ist, kann ein makroskopischer Keil entstehen, der zur Übertragung starker Kupplungs- oder Bremsmomente dienen kann. Durch die völlig überraschende Vervielfachung der Wirkung kann erheblich Bauvolumen eingespart werden. Der ausgenutzte Effekt beruht auf der Keilbildung (Haufenbildung) und nicht nur dem magnetorheologischen Verketten einzelner Partikel. Die typische Reaktionszeit zur Keilbildung benötigt etliche Millisekunden, während das Verketten einzelner Partikel gemäß dem MRF-Effekt schon innerhalb ca. 1 Millisekunde erfolgt. Diese mehrfach längere Zeitdauer ist der Keilbildung geschuldet. Eine solche erhebliche Verstärkung der Wirkung war nicht erwartet worden. Die längere Reaktionszeit von z.B. 5, 10 oder 20 Millisekunden ist in vielen Anwendungsfällen mehr als ausreichend.

Der Kanal kann auch ein Zwischenraum oder ein nach 4 Seiten offener Raum sein.

Als spitzwinkliger Bereich des Kanals wird jener Kanalbereich definiert, der durch die Form von Drehkörper und Komponenten in wenigstens einem Querschnitt annähernd spitzwinklig aussieht. Die Seiten des Bereichs müssen nicht gerade sein, sie können auch gekrümmt sein und/oder eine andere Kontur aufweisen. Dabei definiert der spitzwinklige Bereich jenen Teil des Kanals, in dem Drehkörper und Komponenten insbesondere den kleinsten Abstand zueinander haben bzw. sich berühren sowie den angrenzenden Bereich, in dem sich die Oberflächen von Drehkörper und Komponenten voneinander entfernen.

Unter der Wirkung eines Magnetfeldes bildet sich der spitzwinklige und das magnetorheologische Medium enthaltende Bereich aus, in dem eine erheblich erhöhte Viskosität vorliegt.

Es ist ein gutes Drehmoment zu Gewichts-Verhältnis möglich, welches größer als 100 Nm/kg sein kann.

Vorzugsweise wird ein Drehkörper durch eine Relativgeschwindigkeit zu wenigstens einer Komponente in eine Drehbewegung versetzt. Dabei ist es möglich, dass die Umfangsgeschwindigkeit des Drehkörpers gleich der Relativgeschwindigkeit zu der Komponente ist. Es ist aber auch möglich, dass die Umfangsgeschwindigkeit des Drehkörpers auf seiner äußeren Oberfläche größer oder kleiner als die Relativgeschwindigkeit ist. Insbesondere ist es möglich, dass die Umfangsgeschwindigkeit des Drehkörpers auf seiner äußeren Oberfläche geringer ist als die Relativgeschwindigkeit des Drehkörpers zu der Komponente.

Der Drehkörper kann im Wesentlichen rotationssymmetrisch um wenigstens eine Drehachse ausgebildet sein. Ebenso ist es möglich, dass der Drehkörper zu mehreren Drehachsen rotationssymmetrisch ausgebildet ist. Beispielsweise kann der Drehkörper als Kugel oder Ellipsoid ausgebildet sein. Möglich ist es auch, dass der Drehkörper als Zylinder, Rolle oder allgemein als Rollkörper ausgestaltet ist. Insbesondere eine etwa zylindrische Ausgestaltung hat sich als vorteilhaft erwiesen, da sich beispielsweise bei einem zylindrischen Drehkörper über die gesamte Breite des Drehkörpers der spitzwinklige und das Medium enthaltende Bereich ausbildet, der so im Wesentlichen keilförmig ausgestaltet ist. Bei diesen und anderen Ausgestaltungen weist der spitzwinklige Bereich eine Keilform auf.

Es ist aber nicht nötig, dass der Drehkörper rotationssymmetrisch ausgebildet ist. Auch Drehkörper mit elliptischen oder eiförmigen Querschnitten oder Drehkörper mit Einbuchtungen wie Golfbälle oder mit regelmäßigen oder unregelmäßigen Ein- und/oder Ausbuchtungen können vorteilhaft verwendet werden. Die Oberfläche der Drehkörper kann glatt ausgestaltet sein, muss es aber nicht. Da die Drehkörper nicht zur Lagerung und Abstützung der Komponenten gegeneinander verwendet werden, ist eine symmetrische und/oder glatte Oberfläche nicht notwendig. Vorteilhaft können sogar Drehkörper mit rauer und/oder unregelmäßiger Oberfläche sein, da der Keileffekt verstärkt wird. Ein erhöhter Verschleiß tritt nicht auf, da die Drehkörper nicht zur Lagerung und Übertragung von Tragkräften eingesetzt werden.

Die Verstärkung der Wirkung erfolgt vorzugsweise nicht nur durch eine Verstärkung oder Bündelung des Magnetfeldes, sondern vor allem auch durch die vor den Drehkörpern oder Rollen angehäuften Partikel und deren Verdichtung. Wegen des Magnetfeldes können die Partikel nicht weg und verdichten so schneller zu einem Keil. Der Keil ist von außen einfach per Schalter steuerbar. Der Vorteil bei magnetorheologischen Fluiden wie MRF ist, dass durch das Aufheben des Magnetfeldes sich der Keil wieder lösen kann. Mit dem Magnetfeld kann - ohne mechanische Bewegung oder Krafteinleitung - der Keil beeinflusst werden. Zur gezielten Beeinflussung und sicheren Steuerung hat es sich als vorteilhaft herausgestellt, dass der freie Abstand zwischen dem Drehkörper und der Komponente größer als ein mehrfaches des Partikeldurchmessers ist.

Der Durchmesser der Partikel des magnetorheologischen Mediums beträgt insbesondere zwischen 1 µm und 10 µm. Der typische mittlere Durchmesser der Partikel des magnetorheologischen Mediums ist der arithmetisch gemittelte Durchmesser der Partikel die größer sind als das kleinste Prozent und die kleiner sind als das größte Prozent. In der Regel entspricht dieser Wert dem Mittelwert der Durchmesser des größten und des kleinsten Partikels, im gewählten Beispiel also 5,5 µm. Wenn aber beispielsweise eine sehr geringe Zahl noch kleinerer Partikel vorhanden ist, ändert das nichts an dem so bestimmten typischen mittleren Durchmesser. Das gleiche gilt, wenn z.B. einzelne Partikel mit 10,5 µm oder 11 µm Durchmesser enthalten sein sollten.

Vorzugsweise beträgt der freie Abstand zwischen dem Drehkörper und der Komponente mehr als 30 µm und insbesondere weniger als 300 µm. Der typische mittlere Durchmesser der Partikel liegt vorzugsweise zwischen 3 µm und 7 µm. Vorzugsweise beträgt der freie Abstand zwischen dem Drehkörper und der Komponente mehr als 70 µm und insbesondere weniger als 250 µm.

Vorteilhafterweise verkeilt der spitzwinklige Bereich bei Anlage eines Magnetfeldes die zwei sich ohne Magnetfeld frei zueinander bewegbaren Komponenten. Ein mechanischer Keil in Form eines separaten festen Teils ist dafür nicht erforderlich.

Vorzugsweise ist der spitzwinklige Bereich zwischen dem Köper und einer Komponente so vorgesehen, dass sich der spitzwinklige Bereich in Richtung der Relativbewegung der Komponente relativ zu dem Drehkörper verjüngt. Wälzt ein zylindrischer Drehkörper auf einer flachen Oberfläche einer Komponente ab, so bildet sich der spitzwinklige Bereich in Keilform vor dem Drehkörper. Durch die Verkettung der Partikel in dem Medium entsteht ein sich insgesamt verkettender Keil, der die Relativbewegung des Drehkörpers zu der Komponente hemmt.

Besonders bevorzugt ist der und insbesondere jeder Drehkörper als separates Teil zwischen der ersten und der zweiten Komponente ausgebildet. Dann ist es bevorzugt, dass die eine Komponente als äußere Komponente die andere Komponente als innere Komponente umgibt. Beispielsweise kann eine (Antriebs-) Welle als innere Komponente vorgesehen sein. Die andere bzw. äußere Komponente kann beispielsweise zum Bremsen dienen und die Welle radial umgeben. Zwischen der Welle und der äußeren Komponente können die Drehkörper vorgesehen sein. Es hat sich herausgestellt, dass zur Erzielung des Keileffektes sich um ihre eigene Achse drehende Drehkörper erheblich besser sind. Ausgearbeitete Lagerschalen sind nicht nötig. Die Übertragung eines Kupplungs- oder Bremsmomentes funktioniert unabhängig von der Qualität der Abrollflächen.

Zur Lagerung der beiden Komponenten kann wenigstens ein separates Lager oder Wälzlager vorgesehen. Die Drehkörper sorgen mit dem Keileffekt für die Übertragung der gewünschten Drehmomente, während das oder die Wälzlager zur definierten Führung und Abstützung der beiden Komponenten und dem gleichbleibenden Laufspalt sorgen.

Zwischen der Antriebswelle und dem Drehkörper bzw. dem Drehkörper und dem Grundkörper/Gehäuse kann auch ein Getriebe angeordnet sein oder es können kinematische Hebel verwendet werden. Dadurch kann das Moment und der Drehwinkel in einem größeren Bereich variiert werden oder der haptische Bedienknopf kann kleiner gebaut und damit das Bauvolumen merklich verringert werden. Das Getriebe kann nach dem Stand der Technik sein, vorzugsweise ein möglichst spielfreies Planetengetriebe oder Wellgetriebe (z.B. Harmonic Drive).

In allen Ausgestaltungen ist vorzugsweise der freie Abstand mindestens doppelt, fünfmal und insbesondere zehnmal so groß ist wie der größte typische Partikeldurchmesser. In bestimmten Ausgestaltungen hat sich ein freier Abstand zwischen etwa dem fünffachen und insbesondere dem zehnfachen und dem zwanzigfachen größten typischen Partikeldurchmesser als vorteilhaft herausgestellt. Bei größeren freien Abständen wird das maximal übertragbare Drehmoment wieder reduziert, da der Keileffekt nachlässt. Bei zu geringen freien Abständen kann es auch ohne Magnetfeld zu einer Blockade kommen. Außerdem kann dann nicht immer ein Lösen des Keils nach dem Abschalten des Magnetfeldes gewährleistet werden.

Unter dem mittleren Partikeldurchmesser wird das arithmetische Mittel aus minimalem und maximalem Partikeldurchmesser verstanden. Die meisten MRF weisen magnetisch polarisierbare Partikel auf, die eine Größenverteilung zwischen etwa 1 µm und 10 µm aufweisen. Der mittlere Partikeldurchmesser ist bei diesem Beispiel 5,5 µm. Bei variablen Größenverteilungen wird unter dem größten typischen Partikeldurchmesser ein Partikeldurchmesser verstanden, den nur weniger als 1% der Partikel überschreiten. Der größte typische Partikeldurchmesser ist im genannten Beispiel etwas geringer als 10 µm, sodass hier von 10 µm als größtem typischen Partikeldurchmesser ausgegangen werden kann.

Vorzugsweise ist der freie Abstand größer als 1/500 und vorzugsweise größer als 1/250 und insbesondere größer als ein 1/100 und besonders bevorzugt größer als 1/50 eines Durchmessers wenigstens eines Drehkörpers und insbesondere ist der freie Abstand kleiner als 1/10 und insbesondere kleiner als 1/20 des Durchmessers des Drehkörpers.

Der freie Abstand ist vorzugsweise größer als 1/300 des Außendurchmessers der inneren Komponente und/oder größer als 1/500 des Innendurchmessers der äußeren Komponente. Vorzugsweise ist der freie Abstand größer als 30 µm und insbesondere kleiner als 200µm.

Bei allen Zahlenangaben sind vorzugsweise Variationen um +/- 20% möglich. Unter einem Partikel wird im Folgenden ein magnetisch polarisierbarer Partikel verstanden.

Werden übergroße Drehkörper und/oder Wellendurchmesser verwendet, können andere Abstände vorteilhaft sein. Ein Vorteil dieser magnetorheologischen Übertragungsvorrichtung mit wenigstens zwei koppelbaren Komponenten ist, dass die Keilbildung fertigungstolerant ist, d.h. z.B. fertigungs- und montagebedingte Unterschiede in Spalthöhen, Oberflächen, Abmessungen wie auch Wärmeausdehnungen oder lastbedingte Verschiebungen von Komponenten haben einen untergeordneten Einfluss auf diesen und verursachen vernachlässigbare Momenten- oder Kraftunterschiede.

Eine z.B. konstruktiv bedingte Änderung vom Spalt innerhalb gewisser Systemgrenzen kann auch z.B. durch Sensoren erkannt und durch Feldanpassung ausgeregelt werden.

In bevorzugten Ausgestaltungen ist der Drehkörper Teil der ersten oder der zweiten Komponente. Das bedeutet, dass der beispielsweise als Drehkörper ausgebildete Drehkörper Teil der ersten Komponente ist und auf der zweiten Komponente beispielsweise abrollt. Der Drehkörper kann aber auch ohne mechanische Verbindung zu beiden Komponenten sein.

In dem spitzwinkligen und zum Beispiel keilförmigen Bereich verketten sich bei Anlage eines äußeren Magnetfeldes die ferromagnetischen Partikel in dem Medium und führen zu einem örtlich festeren Gebilde, welches sich der weiteren Relativbewegung zwischen dem Drehkörper und der benachbarten Komponente widersetzt. Durch die Wälzbewegung des Drehkörpers können die Partikel im keilförmigen Teil in Bewegungsrichtung vor dem Drehkörper zusätzlich verdichtet werden. Diese Verdichtung kann aber je nach Gestaltung des Drehkörpers auch durch Nick-, Kipp- oder sonstige Bewegungen relativ zu einer Komponente erfolgen.

Rollt der Drehkörper beispielsweise auf der Oberfläche einer Komponente ab und bildet sich vor dem Drehkörper ein solcher spitzwinkliger Bereich aus, so werden durch die Drehbewegung des Drehkörpers von der äußeren Oberfläche Partikel in dem Medium mitgerissen und in Drehbewegung versetzt, wobei sich aber der sich verhärtende spitzwinklige Bereich einer solchen Drehbewegung stark widersetzt. Der spitzwinklige Bereich in Keilform führt zu einer Kraft auf den Drehkörper weg von der Komponente. Gegebenenfalls kann eine solche Kraft und eine daraus resultierende Bewegung auch für Feinjustagezwecke verwendet werden. Vorzugsweise kann durch den spitzwinkligen Bereich in Keilform eine rotative Bewegung in eine axiale Verschiebung des Drehkörpers umgewandelt werden, wenn das Magnetfeld aktiviert wird. Dadurch wird quasi ein Aufschwimmen des Drehkörpers durch die Partikel bewirkt. Es ist auch möglich den Drehkörper oder eine Komponente beispielsweise mit gewindeförmigen Einkerbungen zu versehen oder relativ zueinander schräg zu lagern, um die Wirkrichtung der resultierenden Kraft zu verändern oder die erreichbare Kraftübersetzung weiter zu erhöhen. Dadurch kann mit einer Art Gewindestange eine lineare Bewegung in eine Rotationsbewegung überführt werden. Durch Anlage eines Feldes wird die Relativbewegung gehemmt.

Es ist ebenso bevorzugt, dass der Drehkörper als separates Teil zwischen der ersten und der zweiten Komponente ausgebildet ist. Eine solche Ausgestaltung kann besonders vorteilhaft sein, da es zu zwei spitzwinkligen Bereichen bzw. keilförmigen Bereichen zwischen dem Drehkörper und den beiden Komponenten kommen kann. Liegt der Drehkörper auf der einen Seite praktisch an der ersten Komponente und an der anderen Seite praktisch an der zweiten Komponente an, so bilden sich auf beiden Seiten spitzwinklige Bereich, die dem Magnetfeld der Magnetfelderzeugungseinrichtung ausgesetzt werden. Dadurch wird die Wirkung erhöht. Dazu ist es nicht nötig, dass der Drehkörper vollständig an der ersten Komponente oder der zweiten Komponente anliegt. Dabei verbleibt zwischen dem Drehkörper und der jeweiligen Komponente ein geringer Spalt. Die Größe des Spaltes hängt unter anderem von den Eigenschaften des Mediums ab. Insbesondere kann die Größe des Spaltes wenigstens dem fünffachen und vorzugsweise wenigstens dem zehnfachen oder zwanzigfachen eines typischen oder mittleren Partikeldurchmessers entsprechen.

Die ferromagnetischen Partikel bestehen insbesondere aus Carbonyleisenpulver. Das Fluid kann z.B. ein Öl sein.

Möglich ist es auch, dass magnetorheologische und elektrorheologische Medien gemeinsam eingesetzt werden. Denkbar ist auch der Einsatz anderer Medien, die durch entsprechende Felder beeinflusst und beispielsweise verkettet werden. Ebenso möglich ist der Einsatz von Medien, welche ihre rheologischen Eigenschaften in Abhängigkeit von sonstigen physikalischen Größen wie beispielsweise Temperatur oder Schergeschwindigkeit verändern.

Der Kanal kann vollständig oder auch nur teilweise mit dem Medium gefüllt sein. Vorzugsweise ist zumindest der spitzwinklige Bereich des Kanals mit dem Medium gefüllt.

In allen Ausgestaltungen kann die erste und/oder zweite Komponente rotationssymmetrisch ausgebildet sein. Beispielsweise können die Komponenten jeweils als Scheiben oder zylindrische Körper ausgebildet sein, zwischen denen Drehkörper vorgesehen sind, um durch den Keileffekt die Wirkung des Magnetfeldes der Magnetfelderzeugungseinrichtung entsprechend zu erhöhen.

In allen Ausgestaltungen ist es bevorzugt, dass das Magnetfeld durch den Drehkörper und insbesondere im Wesentlichen quer zu der Relativbewegung der Komponenten zueinander und von einer Komponente zu der anderen Komponente wenigstens teilweise durch den Drehkörper verläuft. Eine solche Ausgestaltung hat sich als besonders wirkungsvoll herausgestellt, da die Wirkung des Magnetfeldes an den Übergangspunkten von dem Drehkörper auf die Wände des Kanals besonders stark ist. Abhängig vom wirkenden Magnetfeld ist es deshalb vorteilhaft, wenn der Drehkörper zumindest teilweise magnetisch leitfähig ist. Insbesondere ist wenigstens eine und insbesondere sind beide Komponenten und/oder der wenigstens eine Drehkörper zumindest teilweise aus einem ferromagnetischen Material. Die Permeabilitätszahl ist vorzugsweise größer als 500. Die auch relative Permeabilität genannte Permeabilitätszahl des Materials kann auch 1000, 2000 oder mehr betragen. Möglich sind beispielsweise Drehkörper aus einem ferromagnetischen Stahl, wie ST37.

Durch ein gedämpftes magnetisches Wechselfeld kann eine Entmagnetisierung des Materials erfolgen, damit ohne Restfeld ein niederes Grundmoment erreicht wird.

In allen Ausgestaltungen ist es bevorzugt, dass die Magnetfelderzeugungseinrichtung wenigstens einen Dauermagneten und/oder wenigstens eine Spule umfasst. Möglich ist auch der Einsatz eines oder mehrerer Dauermagneten und einer oder mehrerer elektrischer Spulen.

Möglich und bevorzugt ist es, die Magnetisierung des Dauermagneten durch wenigstens einen magnetischen Impuls einer elektrischen Spule dauerhaft zu verändern. Bei einer solchen Ausgestaltung wird der Dauermagnet durch magnetische Impulse der Spule so beeinflusst, dass die Feldstärke des Dauermagneten dauerhaft verändert wird. Dabei kann die dauerhafte Magnetisierung des Dauermagneten durch den magnetischen Impuls der Magnetfelderzeugungseinrichtung auf einen beliebigen Wert zwischen Null und der Remanenz des Dauermagneten eingestellt werden. Auch die Polarität der Magnetisierung ist veränderbar. Ein magnetischer Impuls zur Einstellung einer Magnetisierung des Dauermagneten ist insbesondere kürzer als 1 Minute und vorzugsweise kürzer als 1 Sekunde und besonders bevorzugt beträgt die Länge des Impulses weniger als 10 Millisekunden.

Als Effekt eines Impulses bleibt die Form und Stärke des Magnetfeldes in dem Dauermagneten dauerhaft erhalten. Die Stärke und Form des Magnetfeldes kann durch zumindest einen magnetischen Puls der Magnetfelderzeugungseinrichtung geändert werden. Durch ein gedämpftes magnetisches Wechselfeld kann eine Entmagnetisierung des Dauermagneten erfolgen.

Als Material für solch einen Dauermagneten mit veränderbarer Magnetisierung eignet sich beispielsweise AlNiCo, es können aber auch andere Materialien mit vergleichbaren magnetischen Eigenschaften eingesetzt werden. Es ist zudem möglich, anstelle eines Dauermagneten den gesamten magnetischen Kreis bzw. Teile von ihm aus einer Stahllegierung mit starkem Restmagnetismus (hoher Remanenz) herzustellen.

Möglich ist es, mit dem Dauermagneten ein dauerhaftes statisches Magnetfeld zu erzeugen, welches durch ein dynamisches Magnetfeld der Spule überlagert werden kann, um die gewünschte Feldstärke einzustellen. Dabei kann durch das Magnetfeld der Spule der aktuelle Wert der Feldstärke beliebig verändert werden. Möglich ist auch der Einsatz zweier getrennt ansteuerbarer Spulen.

In allen Ausgestaltungen ist es bevorzugt, wenigstens eine Steuereinrichtung vorzusehen. Möglich ist auch der Einsatz eines Energiespeichers wie beispielsweise eines Kondensators zur Speicherung zumindest eines Anteils der benötigten Energie. Wenigstens ein Sensor oder mehrere Sensoren können zur Detektion relevanter Daten wie beispielsweise der Relativgeschwindigkeit der Komponenten zueinander oder der vorherrschenden Feldstärke und dergleichen dienen. Möglich ist es auch, als Sensor einen Temperatursensor einzusetzen, der z. B. bei Überschreiten vorbestimmter Temperaturbedingungen einen Alarm auslöst. Es kann vorteilhaft ein Drehwinkelgeber eingesetzt werden, um jederzeit Daten über die Winkelposition der Komponenten zueinander zu haben.

In allen Ausgestaltungen ist es bevorzugt, dass der Dauermagnet zumindest teilweise aus einem hartmagnetischen Material besteht, dessen Koerzitivfeldstärke größer als 1kA/m und insbesondere größer als 5kA/m und vorzugsweise größer als 10kA/m ist.

Der Dauermagnet kann zumindest teilweise aus einem Material bestehen, welches eine Koerzitivfeldstärke kleiner als 1000 kA/m und vorzugsweise kleiner als 500 kA/m und besonderes bevorzugt kleiner als 100 kA/m aufweist.

Die magnetorheologische Übertragungsvorrichtung ist Teil einer Bedieneinrichtung, die insbesondere einen Bedien- oder Steuerknopf oder dergleichen umfasst.

Der Drehkörper und wenigstens eine Komponente können sich an zumindest einem Punkt oder zumindest einer Linie berühren. Es ist möglich und bevorzugt, dass der Drehkörper relativ zu zumindest einer Komponente in Ruhe ist.

Vorzugsweise kann sich der Drehkörper relativ zu zumindest einer Komponente, beispielsweise in Form einer Dreh- oder Kippbewegung, bewegen.

Die Feldstärke kann abhängig von dem jeweiligen Abstand zwischen Drehkörper und Komponenten einen starken Gradienten aufweisen.

Die Feldstärke erhöht sich vorzugsweise im spitzwinkligen Bereich zwischen Drehkörper und Komponenten zum Bereich mit dem geringsten Abstand hin.

Der Wartungsbedarf ist gering, da wenige und einfache Bauteile eingesetzt werden. Gegebenenfalls kann die Wartung durch einfachen Austausch der magnetorheologischen Flüssigkeit durchgeführt werden. Der Aufbau ist einfach und robust und es werden keine Stromdurchführungen benötigt. Außerdem ist der Energiebedarf geringer als beim Stand der Technik, denn der Keileffekt trägt erheblich zur Beeinflussung der Relativbewegung der Komponenten bei. Es ist möglich, ein Drehmoment/Gewichts-Verhältnis von >100 Nm/kg zu erreichen.

Bei magnetorheologischen Kupplungen bzw. Bremsen ohne Keileffekt bewegen sich die Magnetfeldpole relativ zueinander und erzeugen in der dazwischenliegenden MR Flüssigkeit Scherkräfte (Direct Shear Mode). Die Scherkräfte variieren je nach Magnetfeld. Kein Magnetfeld bedeutet keine bzw. geringe Scherkräfte (keine Kettenbildung im MRF), maximales Magnetfeld bedeutet maximale Scherkräfte und damit maximale Bremskraft bzw. Bremsmoment. Vereinfacht gesagt sind Magnetfeld und Scherkräfte proportional.

Bei der vorliegenden Erfindung kann durch entsprechende Gestaltung der Einzelkomponenten, Dimensionierung und Feldeinbringung ein davon abweichendes und sehr vorteilhaftes Verhalten geschaffen werden. Dieses vorteilhafte Verhalten äußert sich dahingehend, dass zum Halten der spitzwinkligen Ausbildung bzw. des MR-Fluid Keils ein wesentlich geringeres Magnetfeld und damit eine geringere Stromstärke als zum erstmaligen Erzeugen des Keils benötigt wird. Dies kommt daher, dass die Partikelanhäufung, ist sie erstmals angehäuft und durch die dieser Erfindung zugrundeliegenden speziellen Bewegungen unter Einfluss eines richtig eingebrachten Magnetfeldes quasi mechanisch verdichtet, nicht mehr so leicht zerfällt. Dies hat zur Folge, dass z.B. nach einer entsprechenden Zeit zum Erreichen dieses Zustandes ein Bremsmoment mit dem Bruchteil des Magnetfeldes bzw. an elektrischer Leistung (Spulenstrom) gehalten werden kann, was energietechnisch vorteilhaft ist.

Werden Kupplungen mit magnetorheologischen Flüssigkeiten nach dem Stand der Technik über das maximal übertragbare Kupplungsmoment hinaus beansprucht, beginnen einzelne Partikelketten abzureißen, wodurch sich ein Schlupf bzw. ein Durchrutschen einstellt. Das maximale Kupplungsmoment bleibt aber erhalten, es nimmt mitunter sogar leicht zu, die Kupplung löst sich nicht. Je nach Anwendung kann dies unerwünscht sein, so z.B. wenn sich ein Bohrmaschinenbohrer beim Bohren verklemmt.

Bei der vorliegenden Erfindung kann durch entsprechende Gestaltung der Einzelkomponenten, Dimensionierung und Feldeinbringung ein davon abweichendes und sehr vorteilhaftes Verhalten geschaffen werden. Dieses vorteilhafte Verhalten äußert sich dahingehend, dass beim Überschreiten einer maximalen Kraft zwischen den sich bewegenden Teilen der vom Magnetfeld erzeugte Keil (Materialanhäufung) schlagartig durch den Spalt gepresst wird (Material verdrängt) und die Kraft damit eingehend schlagartig abnimmt. Aufgrund der daraus resultierenden Relativbewegung und der hohen anliegenden Kraft bildet sich kein neuer Keil, wodurch die Relativkraft niedrig bleibt. Bei Überlastkupplungen ist dieses Verhalten sehr vorteilhaft. Über das Magnetfeld kann die maximale Kraft (Auslösekraft) bzw. das maximale Moment (Auslösemoment) voreingestellt werden.

Weiterhin werden Entmischungs-, Sedimentations- und Fliehkraftprobleme zuverlässig vermieden, da durch die rotierenden Drehkörper eine ständige Vermischung der Partikel in dem Medium erzielt wird. Aufgrund der erheblich höheren übertragbaren Momente und Kräfte können Kupplungen, Bremsen oder dergleichen mit wesentlich kleineren Durchmessern realisiert werden. Aufgrund der geringen MRF Kanalhöhe und der Drehbewegung der Drehkörper ist ein Entmischen bei der vorliegenden Erfindung praktisch nicht relevant.

Die Erfindung kann vielfältig eingesetzt werden. Der Einsatz ist als Bedienelement an Haushaltsgeräten wie Waschmaschinen einsetzbar und auch zum Wählen des Betriebszustandes von Fahrzeugen.

Auch bei einer dreidimensionalen Bewegung kann die Erfindung eingesetzt werden. So kann die Rotation und Pendelbewegung durch den MRF Keil beschränkt bzw. blockiert werden. Das wirkende Moment ist stufenlos einstellbar und es können Schaltzeiten im Bereich einiger Millisekunden erzielt werden. Der Aufbau ist einfach und es sind keine mechanisch bewegten Teile zum Variieren des Drehmoments nötig. Ein weiterer Vorteil ist, dass ein fast geräuschloser Betrieb möglich ist. Die Mehrkosten sind gering und eine erfindungsgemäße magnetorheologische Übertragungsvorrichtung kann betriebssicher ausgelegt werden, wenn beispielsweise ein Dauermagnet mit Remanenz für die Einstellung eines Magnetfeldes verwendet wird. Der Keileffekt verstärkt die Wirkung enorm, sodass ein kleinerer Bauraum erzielbar ist.

In allen Ausgestaltungen müssen die Drehkörper nicht glatt sein, sondern können raue oder unebene Oberflächen aufweisen.

Die haptische Bedieneinrichtung kann vielfältig eingesetzt werden. und umfasst z.B. Regler für eine Kranbedienung oder dergleichen. Dabei kann die Drehung je nach Last schwergängiger gesteuert werden. Es kann auch in Abhängigkeit von der Lasthöhe gesteuert werden.

Interessant ist der Einsatz auch bei "Forcefeedback"- oder bei "Steer by wire"-Anwendungen, wie im Lenkrad, Gaspedal, Bremspedal. Auch der Einsatz an Bedienelementen in Fahrzeugen, Lenkrädern, Autoradios, Scheibenwischerschaltern, Home Appliance, Stereoanlagen, Fernbedienungen, Fotoapparaten, Prüfständen, Oszilloskopen, Bedienvorrichtungen, Robotersteuerungen, Drohnensteuerungen und beim Positionieren von militärischen Waffen etc. ist möglich.

In allen Ausgestaltungen ist es möglich, zusätzlich zu einer Dichtung mit einer Dichtlippe auch magnetische Dichtungen zur Abdichtung einer erfindungsgemäßen Vorrichtung einzusetzen. Dabei kann die Dichtung über einen Permanentmagneten erfolgen. Vorteile einer solchen Ausgestaltung sind kleinere Grundkräfte, die Verschleißfreiheit und die Zulässigkeit größerer Fertigungstoleranzen. Außerdem liegt ein definiertes Überlastverhalten vor, da ein definiertes Durchbrechen erfolgt, wenn die Überlast überschritten wird. Es ist möglich eine solche Dichtung vor oder hinter einer erfindungsgemäßen Vorrichtung oder davor und dahinter einzusetzen.

Ein erheblicher Vorteil der Magnetdichtung ist die sehr geringe Reibung; es kann aber nötig sein, noch eine weitere Dichtung einzusetzen, da eine solche Dichtung gegebenenfalls nur MRF Partikel zurückhält und z.B. Öl als Basisflüssigkeit mit der Zeit durch den Spalt durchtreten lässt. Deshalb kann eine solche magnetische Dichtung als Vordichtung eingesetzt werden, um MRF-Partikel zurückzuhalten. Eine weitere z.B. klassische Dichtung dichtet dann nur noch das Trägermedium ab.

Eine Bewegung des Magneten kann verwendet werden, um im MRF z.B. über hydrodynamische Effekte eine Schmierung, sowie Stofftransport und Kühlung zu erreichen. Außerdem kann eine Strömung von der Dichtung weg erzielt werden und es können Druckunterschiede abgebaut werden.

Um z.B. das Spiel zwischen zwei Teilen einzustellen oder aber um Spiel aus einer Konstruktion herauszunehmen und um z.B. Fertigungstoleranzen auszugleichen kann eine Kraft bzw. eine Axialkraft und/oder eine Radialkraft eingesetzt werden, die durch einen MRF Keileffekt hervorgerufen wird.

In allen Ausgestaltungen ist es bevorzugt, eine einstellbare dauerhafte Magnetfeldstärke über Remanenz vorzusehen. In bevorzugten Ausführungsformen hat ein Lager mit einer erfindungsgemäßen magnetorheologischen Übertragungsvorrichtung selbst keinen oder nur minimalen Restmagnetismus (Remanenz). Ansonsten kann es zu einer positionsabhängigen und unterschiedlich starken Gegenkraft kommen, da sich die Teile zueinander bewegen.

Das Remanenzmaterial sollte in vorteilhaften Ausgestaltungen in einem allgemeinen Bereich des Lagers angeordnet sein, der insbesondere positionsunabhängig von dem Magnetfeld durchflutet wird, so z.B. die innere Welle oder die äußere Hülle etc.

Es ist aber auch bevorzugt, den Effekt der positionsabhängigen Magnetisierung zu nutzen, indem z.B. die innere Lauffläche mit Remanenz eingesetzt wird, um beispielsweise bestimmte Rastmomente zu erzeugen. Das kann z.B. für eine haptische Rückkopplung über veränderbare Rastmomente bezüglich ihrer Stärke, des Drehwinkels oder des Endanschlags oder dergleichen erfolgen. Je nach gewünschter Einstellbarkeit müssen nicht alle Lagerkugeln ferromagnetisch sein.

Es ist auch möglich, eine magnetorheologische Übertragungsvorrichtung mit vom klassischen Lageraufbau abweichender Gestaltung vorzusehen. Die Richtung des Magnetfeldes kann z.B. wenigstens teilweise oder vollständig auch etwa parallel zur Achse ausgerichtet sein. Möglich ist auch eine wenigstens teilweise Ausrichtung parallel zur Dreh- oder Bewegungsrichtung oder in tangentialer Richtung. Möglich ist es auch, dass der gesamte magnetische Kreis nahezu oder vollständig im Inneren oder stirnseitig angeordnet ist.

Das Material des magnetorheologischen Übertragungsvorrichtung muss nicht komplett ferromagnetisch sein, je nach gewünschter Anwendung bzw. Magnetisierung kann es vorteilhaft sein, wenn einzelne Bestandteile der magnetorheologischen Übertragungsvorrichtung nicht bzw. nur teilweise ferromagnetisch sind.

Je nach Anwendung ist es auch denkbar, wenigstens einen Teil aus verschiedenen Materialien zu fertigen, um lokal unterschiedliche magnetische Eigenschaften zu erhalten.

Die haptische Bedieneinrichtung funktioniert vorzugsweise mit einer magnetorheologischen Übertragungsvorrichtung mit Keileffekt. Die Position bzw. der Drehwinkel des Drehknopfs kann über den Drehgeber bestimmt und der Drehwiderstand in einem weiten Bereich verändert werden. Dadurch kann beispielsweise ein haptisches Interface mit veränderbaren Rastmomenten und beliebig einstellbarem Endanschlag aufgebaut werden, welcher je nach gerade angewähltem Menü seine Eigenschaften ändert. Es kann ein niederes oder hohes Moment und/oder ein kleines oder großes Raster/Rippel und auch ein variables Raster - je nach zu bedienendem Menü - eingestellt werden. Der Verlauf der Momentenzu- und -abnahme kann situationsabhängig eingestellt oder variiert werden, beispielsweise als rechteck-, sinus-, sägezahnförmiger oder beliebiger Verlauf. Auch ein Anschlag kann simuliert werden. Der Anschlag kann hart sein oder einen vordefinierten oder situationsabhängigen Momentenverlauf haben. Beim Drehen in eine Richtung kann der Momentenverlauf anders wie beim Drehen in die andere Richtung sein.

Der Drehknopf als eine Komponente ist vorzugsweise fest mit der Welle als anderer Komponente verbunden, welche wiederum drehbar im Gehäuse gelagert ist. Die Relativbewegung bzw. Relativposition wird über einen Drehgeber erfasst, z.B. über einen magnetischen, optischen oder (über Tasten) mechanischen Inkrementalgeber. Auch ein Potentiometer mit Schleifkontakten kann eingesetzt werden, mit diesem sind aber üblicherweise nur bestimmte Drehwinkel zulässig.

Ein Dichtring ist vorteilhaft, damit die magnetorheologische Flüssigkeit im Gehäuse bleibt. Die Dichtung kann auch nur aus Permanentmagneten oder einer Kombination aus Permanentmagnet und herkömmlicher Dichtung bestehen.

Der innere Bereich, d.h. das von Dichtung und Gehäuse eingeschlossene Volumen, ist zumindest teilweise mit einer magnetorheologischen Flüssigkeit gefüllt.

Das Gehäuse ist vorzugsweise als Topf ausgebildet, d.h. einseitig geschlossen. Dadurch wird nur ein Dichtring benötigt. Eine durchgehende Welle (beidseitige Welle) ist auch denkbar.

Die Spule kann ein Magnetfeld erzeugen, wobei der magnetische Kreis über das Gehäuse, die Welle und die magnetorheologische Übertragungsvorrichtung geschlossen wird. Dadurch kann sich in der magnetorheologischen Übertragungsvorrichtung das für den Keileffekt nötige Magnetfeld aufbauen. Vorteilhafter Weise ist die Spule fest mit dem Gehäuse verbunden, was die Kabelführung erleichtert.

Der Aufbau ist robust und kann so ausgelegt sein, dass fast keine magnetischen Streufelder außerhalb des Gehäuses erzeugt werden. Denkbar sind aber viele andere Aufbauvarianten, die je nach Anwendungsfall bestimmte Vorteile haben können.

Beispielsweise kann die Spule auch außerhalb des Gehäuses angeordnet sein, wobei das Magnetfeld dann durch das Gehäuse hindurch auf die magnetorheologische Übertragungsvorrichtung wirkt. Dabei ist keine mechanische Verbindung zwischen Spule und Gehäuse nötig, das Koppeln der magnetischen Kreise reicht, um die magnetorheologische Übertragungsvorrichtung im Gehäuse zu beeinflussen. Insbesondere muss die Spule nicht dauerhaft am oder in der Nähe des Gehäuses sein und kann derart gestaltet werden, dass sie als separate Einheit vom Gehäuse entfernt werden kann. Es können auch Permanentmagnete im Magnetkreis vorhanden sein.

Der Drehknopf kann in einer bevorzugten Ausführung beispielsweise elektromagnetisch angetrieben sein und auch aktiv eine Kraft ausüben (Force Feedback), um statisch eine gewisses Gegenmoment erzeugen zu können. Bei dieser Konstruktion wird ein besseres Drehmoment zu Bauraumverhältnis erzielt als bei vielen Konstruktionen nach dem Stand der Technik. Zudem sind die Herstellkosten wegen des einfachen Aufbaus gering, da z.B. die Abrollflächen der Komponenten bei Haptikanwendungen nicht hochpräzise sein müssen und auch in der Regel keine hohen Drehzahlen und keine große Anzahl an Umdrehungen aushalten müssen. Generell hat die hier beschriebene magnetorheologische Übertragungsvorrichtung eine sehr niedere Grundreibung (OFF State). Vorzugsweise ist auch eine Batterie und ein Steuerbefehlübertragungseinheit (Funk, WLAN, Bluetooth, NFC, ANT..) in den Steller bzw. Drehknopf integriert. Der Haptikknopf kann dann überall platziert werden und braucht keinen leitungsgebundenen Steuer- bzw. Stromanschluss. Das MRF Keilprinzip braucht in Relation zum Drehmoment sehr wenig Strom (Leistung). Deshalb ist es auch für den Batteriebetrieb oder zur drahtlosen Energieversorgung gut geeignet. Dabei können sowohl die benötigte Energie als auch Steuerbefehle und beispielsweise auch Messwerte von Sensoren wie Drehwinkel drahtlos übertragen werden.

Eine bevorzugte Ausführung kommt ohne Batterie aus und erhält die für die Funktion notwendige Energie mittels induktiver Kopplung. Besonders bevorzugt sind auch Ausführungen, die die zum Betrieb nötige Energie direkt aus der Umwelt beziehen und lokal zwischenspeichern (Energy Harvesting). Dabei sind zur Energiewandlung thermoelektrische Generatoren, Solarzellen, Elemente die Vibrationsenergie in elektrische Energie wandeln und Andere sowie entsprechende lokale Energiespeicher möglich. Denkbar ist auch, die Bewegung der magnetorheologischen Übertragungsvorrichtung selbst zur Energieerzeugung zu verwenden.

Wenn die magnetorheologische Übertragungsvorrichtung wenigstens teilweise über einen Dauermagneten mit einem magnetischen Magnetfeld beaufschlagt wird, dessen Magnetisierung durch wenigstens einen magnetischen Impuls wenigstens einer elektrischen Spule dauerhaft verändert wird ergeben sich einige Vorteile. In bestimmten Fällen kann z.B. durch die Ausnutzung der Remanenz und des Impulsbetriebs einer Spule, die nicht immer bestromt werden muss, ein Gewichts- und Raumvorteil erzielt werden. Die Drähte der Spule können dünner und leichter dimensioniert werden, weil sie jeweils nur für eine kurze Betriebszeit bestromt werden. Das kann Vorteile bei Gewicht, Strombedarf, Platzbedarf und Kosten ergeben.

Deshalb kann es in bestimmten Anwendungen vorteilhaft sein, dass durch den Impulsbetrieb der elektrischen Spule diese deutlich kleiner ausgeführt werden kann als wenn sie auf 100% Einschaltdauer ausgelegt werden muss. Die Erwärmung der Spule spielt im Impulsbetrieb üblicherweise keine Rolle, da kurzzeitige Verlustleistungsspitzen von der eigenen Wärmekapazität der Spule und der die Spule umgebenden Bauteile abgepuffert werden. Dadurch können sehr hohe Stromdichten in den Windungen toleriert werden bzw. können dünnere Leitungen verwendet werden, solange die mittlere Verlustleistung über längere Zeiträume akzeptabel bleibt.

Üblicherweise kann bei einer kleineren Spule auch der die Spule umgebende magnetische Kreis kleiner ausfallen, weshalb verhältnismäßig viel Bauraum, Material, Gewicht und Kosten eingespart werden können. Dabei steigt lediglich der Energieaufwand für einen einzelnen Puls, was aber je nach Anwendung sehr wohl toleriert werden kann. Insgesamt kann dennoch viel Energie im Vergleich zu einer dauerhaft bestromten Spule eingespart werden.

In allen Ausgestaltungen kann es möglich sein, die Stromversorgung leitungslos zu realisieren. Die Stromversorgung beispielsweise von der Stromquelle zur Leistungselektronik bzw. von der Leistungselektronik zu der Spule kann über eine elektrische, magnetische oder elektromagnetische Kopplung wie beispielsweise eine Funkstrecke erfolgen. Bei der Anwendung in einem Fahrrad kann die Stromversorgung von außen über z. B. eine Docking Station erfolgen. Möglich ist auch die Energieversorgung über eine Energiequelle an z.B. einem Fahrrad auf alle Verbraucher (Gabel, Dämpfer Hinten, Display). Analog kann auch die Stromversorgung bei einem Skischuh, Ski, Mobiltelefon oder zu den Sensoren erfolgen.

Eine Energieversorgung über Funk kann möglicherweise einen schlechteren Wirkungsgrad als eine herkömmliche Verkabelung aufweisen. Außerdem kann die Energieübertragung und deren Reichweite begrenzt sein. Je nach Anwendungsfall stören solche Nachteile aber nicht. Vorteilhaft ist, dass kein Verschleiß der Kontakte auftritt. Die Energieübertragung ist üblicherweise verpolsicher und kurzschlussfest, da sekundärseitig nur eine begrenzte Leistung vorliegt. Weiterhin ist kein Kabelbruch möglich und die Vorrichtung ist insgesamt beweglicher.

Bei solchen Ausgestaltungen ist es aber vorteilhaft, die Energie für zumindest einen Impuls in einem Kondensator oder Energiespeicher zwischenzuspeichern. Dadurch kann die Energieversorgung des Systems eine kleinere Leistung haben, da kurzzeitige Leistungsspitzen eines Impulses vom Kondensator abgefangen werden. Zudem kann auch eine unstetige oder impulsförmige Energieversorgung eingesetzt werden.

Eine mögliche Ausbaustufe der vorliegenden Erfindung ist ein vollkommen autarkes System, welches kabellos mit Energie versorgt wird. Vorstellbar ist beispielsweise die Anwendung an einem Fahrrad, wobei durch zumindest einen kleinen Magneten an einem Reifen das System mit Energie versorgt wird.

Generell können so beliebige "Energy Harvesting"-Einheiten zur Energieversorgung verwendet werden, beispielsweise Solarzellen, thermoelektrische Generatoren oder Piezo-Kristalle. Auch Elemente, welche Vibrationen in Energie wandeln, können so sehr vorteilhaft zur Versorgung eingesetzt werden.

Denkbar ist auch eine Ausführung ähnlich wie bei einer elektrischen Zahnbürste, bei der die Energieversorgung durch induktive Kopplung erfolgt. Dabei kann beispielsweise der Akku induktiv geladen werden, ohne dass beschädigte Kabel, korrodierte oder verschmutzte Kontakte den Ladevorgang behindern. Über längere Strecken kann Energie über magnetische Resonanz übertragen werden.

Die Stromversorgung des Remanenzimpulses kann via Induktion wie bei elektrischen Zahnbürsten erfolgen. Die Kombination des MRF Keilprinzips mit Remanenz ist besonders stromsparend und vorteilhaft.

Es kann auch ein Lautsprecher bzw. eine Geräuscherzeugungseinheit integriert oder zugeordnet sein. Das ist vorteilhaft, da der Drehknopf als MRF Keilknopf an sich mechanisch geräuschlos ist. Sowohl das Drehen ohne als auch mit Raster oder/und die virtuellen Anschlägen sind an sich geräuschlos. Das Erzeugen des MRF Keils zu einer Drehmomenterhöhung oder zur Erzeugung eines Rasters ist ebenso an sich geräuschlos. Mittels der Geräuschquelle wie einem Lautsprecher oder einem Piezolautsprecher kann z.B. dem virtuellen Raster ein Klicken bei jeder Rastposition zugeordnet werden. Die Art, Lautstärke und Dauer des Geräusches kann individuell zugeordnet werden, aber bei Benutzerwunsch auch verändert oder abgeschaltet werden.

Somit ist das Drehmoment, der Raster, die Anschläge und das Geräusch programmierbar bzw. adaptiv. Die Geräusche können auch über externe Lautsprecher wie z.B. Standardlautsprecher im Auto oder die Lautsprecher der Hi-Fi Anlage im Haus erzeugt werden.

Der Haptikknopf kann somit praktisch das Mausrad einer Computermaus ersetzen. Bei dem Raster kann nicht nur der Winkelabstand des Rasters einstellbar sein, sondern auch dessen Verlaufsform, Stärke usw. Damit kann quasi eine Rasterkennlinie vorgeben werden.

Der Haptikdrehknopf kann auch auf einer Bedienfläche oder an einem Bildschirm montiert sein. Damit man das Display nicht für die Befestigung des Knopfes herausnehmen muss, kann dieser aus einem Oberteil auf dem Display und einem Unterteil unterhalb des Displays bestehen. Vorzugsweise ist eine Datenübertragung über z.B. Induktion oder dergleichen vorgesehen. Dadurch kann das Display als eine Fläche billiger hergestellt werden.

Es ist auch möglich, dass ein MRF Haptikknopf sich auch drücken lässt. Dabei kann das Drücken auch durch ein MRF wirken, dessen Eigenschaften über ein Magnetfeld veränderbar sind.

Der Bildschirm zeigt die einzustellenden Informationen an, welche sich je nach Anwendung ändern. Die Funktion des Haptikknopfes passt sich daran an. Einmal wird mittels eines Rasters verstellt (z.B. Einstellen der Lautstärke; auf dem Display erscheint eine Lautstärkenskala, welche auch eine logarithmische Skalierung haben kann).

Ein anderes Mal kann zwischen zwei Positionen ohne Raster aber mit variablem Moment verstellt werden, so z.B. zwischen der Uhrstellung 8:00 und der Uhrstellung 16:00 oder zwischen der Uhrstellung 4:00 und der Uhrstellung 8:00, wobei vor der Endposition jeweils ein zunehmendem Moment vorgesehen sein kann. Das Raster kann auch zum Anfahren definierter Positionen dienen, wenn z.B. nach einer Nameneingabe gefragt wird.

Das Display kann auch als Touchscreen ausgeführt sein. Dadurch können Menüpunkt rasch gewählt und mittels des Drehstellers Feineinstellungen gemacht werden. Z.B. ist es bei Autos nicht gewünscht, die Lautstärkenregelung des Radios über Touchscreen zu machen, da der Fahrer sonst immer lange hinschauen müsste, was und wo er gerade verstellt, was ihn ablenkt. Den Drehsteller findet er auch mit einem kurzen Blick oder ohne Hinsehen.

Das haptische Bedienelement kann auch global verschiebbar auf Führungen oder kinematischen Hebeln sein. So kann das sehr kompakt und nieder bauende haptische Bedienelement z. B. über einem Display montiert werden. Je nach Position der haptischen Bedieneinrichtung über dem Display (quasi wie der Mauszeiger einer Bildschirmmaus) wird das darunterliegende Menü haptisch und dynamisch angepasst ausgeführt.

Auch z.B. beim Fahrradfahren ist das Verstellen mit einem mechanischen Steller einfacher und sicherer als über ein Touchdisplay. Dies insbesondere auch dann, wenn der Radfahrer z.B. Handschuhe an hat, wodurch die Bedienung eines Touchdisplay schwer oder sogar unmöglich ist.

Es ist auch eine Kombination von einem Display oder Touchdisplay und einem mechanischem Drehsteller mit variablem Moment/Raster möglich. Solche Eingabegeräte können auch außerhalb des Kraftfahrzeuges vorteilhaft sein, so z.B. bei Steuerungen für Industrieanlagen, Fernbedienungen für z.B. Fernseher oder Funkfahrzeuge wie Spielzeughubschrauber, sowie an PC und Spielkonsolen, Steuerkonsolen für militärische Anwendungen (Drohnenflugzeuge, Raketen).

Möglich ist es auch, dass ein Haptikdrehknopf mit einer Anzeige die jetzige Computermaus ersetzt.

Es ist möglich, dass der Drehknopf bzw. das Stellglied in normalen Zustand versenkt sein kann und nur bei Bedarf ausgefahren wird.

Es ist auch möglich, eine solche Baueinheit als Schieberegler auszuführen, insbesondere in Kombination mit einer linearen MRF Keileinheit.

Es ist auch möglich, eine magnetorheologische Übertragungsvorrichtung mit einem oder mehreren Polen und einer oder mehreren Erhebungen auszustatten. In allen Ausgestaltungen ist es möglich, dass zwischen den zwei Komponenten der magnetorheologischen Übertragungsvorrichtung Erhebungen oder dergleichen vorgesehen sind, die beispielsweise von der einen Komponente in Richtung auf die andere Komponente hervorstehen.

Sowohl bei einer rotativen als auch bei einer linearen Beweglichkeit der beiden Komponenten zueinander ist eine solche Ausgestaltung möglich und bevorzugt.

Dabei kann nur eine Erhebung vorgesehen sein oder es können mehrere vorgesehen sein. Möglich ist es, dass an wenigstens einer Erhebung eine Kugel oder eine Rolle oder ein sonstiger Drehkörper angeordnet ist, der von der Erhebung wenigstens teilweise aufgenommen wird.

Wenn an der einen Komponente Erhebungen vorgesehen sind, ist es bevorzugt, dass an der anderen Komponente wenigstens ein Pol bzw. wenigstens eine Magnetisierungseinheit oder wenigstens ein Magnet oder einer Spule vorgesehen ist. Die Anzahl der Magnetisierungseinheiten bzw. Pole kann 1 betragen oder auch größer sein.

Die Form der Erhebungen kann grundsätzlich beliebig und z.B. halbrund, spitz oder stumpf sein. Der Aufnahmebereich von Drehkörpern ist vorzugsweise entsprechend abgerundet ausgebildet.

Eine oder mehrere Magnetisierungseinheiten bzw. Pole können als Elektrospule plus Kern, oder als Permanentmagnet ausgebildet sein oder aus Remanenzmaterial oder einen Kombination aus diesen bestehen.

Die Abstände zwischen einzelnen Erhebungen und/oder Magnetisierungseinheiten sind vorzugsweise etwa gleichbleibend, können aber auch beliebig sein.

Die Tiefe, d.h. die radiale Erstreckung oder die axiale Erstreckung einzelner Erhebungen oder Magnetisierungseinheiten zu anderen kann unterschiedlich sein.

Auch die an den einzelnen Magnetisierungseinheiten anliegende oder wirkende Feldstärke kann insbesondere auch zur gleichen Zeit variieren.

Die Drehzahl der Drehkörper muss nicht gleich der Abrolldrehzahl sein, sie kann auch davon abweichen, z.B. durch Unter- oder Übersetzungen. Das Innenteil, welches durch die Erhebungen z. B. sternförmig ausgebildet ist, kann zum Außenteil außermittig gelagert sein.

Eine Anwendung einer solchen magnetorheologischen Übertragungsvorrichtung kann z.B. als Haptikknopf mit Raster oder bei Möbel- und Schubladenführungen mit Positionen erfolgen.

Der Magnet bzw. jede Magnetisierungseinheit oder das Innenteil und/oder das Außenteil können auch aus Remanenzmaterial bestehen.

Da magnetorheologische Fluide bei Anlegung eines Magnetfeldes sehr schnell verketten, kann es im Normalzustand z.B. beim Autofahren ausreichen, wenn das magnetische Feld abgeschaltet ist. Es reicht in der Regel völlig aus, erst einzuschalten, wenn eine erste Drehwinkeländerung eingeleitet wird. Dadurch kann erheblich Energie eingespart werden.

Alternativ dazu kann mit Remanenz ein Grundmoment realisiert werden. Wenn eine Drehwinkeländerung registriert wird, kann ein dynamisches Magnetfeld aufgebaut werden, welches auch pulsieren kann, um ein virtuelles Raster zu erzeugen.

In Ausgestaltungen, in denen die Remanenz genutzt wird, kann das Magnetfeld zum Ummagnetisieren von außen aufgeprägt werden. Zum Ummagnetisieren kann eine entsprechende Spule verwendet werden, die durch z.B. einen Zylinder wirkt.

Das erfindungsgemäße Verfahren dient zum Bedienen von technischen Einrichtungen und Geräten und insbesondere von Fahrzeugen und besonders bevorzugt von Kraftfahrzeugen, wobei eine haptische Bedieneinrichtung mit einer Dreheinheit verwendet wird und auf einer Anzeigeeinheit auswählbare Menüpunkte angezeigt werden und wobei durch Drehen der Dreheinheit ein Menüpunkt selektiert bzw. ausgewählt wird. Insbesondere wird ein Drehmomentverlauf beim Drehen der Dreheinheit dynamisch verändert und/oder die Dreheinheit rastet beim Drehen an einer Anzahl von haptisch fühlbaren Rasterpunkten, wobei dann die Anzahl der haptisch fühlbaren Rasterpunkte dynamisch und insbesondere im Betrieb verändert wird.

Das erfindungsgemäße Verfahren hat viele Vorteile, da es einen einfachen und dynamisch angepassten Betrieb ermöglicht. Die einzelnen Menüpunkte können durch Drehen der Dreheinheit ausgewählt werden und können eindeutig voneinander haptisch unterschieden werden, da an jedem einzelnen Menüpunkt ein Rasterpunkt bzw. ein stärkerer Drehwiderstand ertastbar ist. Durch die sich im Betrieb dynamisch ändernde Anzahl der haptisch fühlbaren Rasterpunkte kann der Betrieb der Bedieneinrichtung optimal an die jeweils vorliegenden Bedürfnissen und an aktuelle Betriebszustände der technischen Einrichtungen bzw. des Fahrzeugs angepasst werden. Eine derartige dynamisch angepasste Verfahrensweise ist mit den haptischen Bedienknöpfen aus dem Stand der Technik so nicht möglich und daraus nicht bekannt.

Vorzugsweise werden die Rasterpunkte durch gezieltes Erzeugen eines Magnetfeldes an einem wenigstens teilweise mit einem magnetorheologischen Medium gefüllten Kanal erzeugt. Ein derartiger Kanal erstreckt sich insbesondere zwischen einem Grundkörper und einer Dreheinheit, die zu Betätigung der haptischen Bedieneinrichtung gedreht wird.

Vorzugsweise wird eine Winkelstellung der Dreheinheit detektiert und in Abhängigkeit von der detektierten Winkelstellung wird eine Intensität des Magnetfeldes eingestellt. Dabei kann die Winkelstellung der Dreheinheit absolut oder relativ erfasst werden.

In bevorzugten Ausgestaltungen wird in wenigstens eine Drehrichtung ein Endanschlag dynamisch erzeugt. Besonders bevorzugt wird an dem Endanschlag das Magnetfeld erheblich stärker eingestellt als einem Rasterpunkt. Durch einen derartig dynamisch eingestellten Endanschlag kann grundsätzlich an jeder beliebigen Winkelposition ein Endanschlag zur Verfügung gestellt werden, sodass nicht der vollständige Drehwinkel ausgenutzt werden muss, um zu einem Endanschlag zu gelangen. Dadurch kann ein Benutzer auch nach relativ kleinen Drehwinkeln auf einfache Art und Weise bewusst gemacht werden, dass nicht noch weitere Menüpunkte bei einem Weiterdrehen zur Verfügung gestellt werden. So kann beispielsweise nach 2, 3 oder 4 Rasterpunkten dynamisch ein Endanschlag erzeugt werden.

Vorzugsweise wird ein Rasterpunkt an einer bestimmten Winkelposition dadurch erzeugt, dass dort oder in der Nähe des Rasterpunktes ein stärkeres Magnetfeld erzeugt wird als weiter entfernt von dem Rasterpunkt. Beispielsweise kann an Winkelstellen benachbart zu der bestimmten Winkelposition ein stärkeres Magnetfeld erzeugt werden als an der für den Rasterpunkt bestimmten Winkelposition.

Es ist möglich, dass das Magnetfeld bei einer Drehbewegung von dem Rasterpunkt weg verstärkt wird, sodass der Benutzer den Rasterpunkt eindeutig ertasten kann.

Möglich und bevorzugt ist es, dass an einem Rasterpunkt ein relatives lokales Minimum des Magnetfeldes erzeugt wird, während in unmittelbarer Nachbarschaft des Rasterpunktes relative Maxima des Magnetfeldes erzeugt werden. Weiter entfernt von dem Rasterpunkt kann das Magnetfeld wieder verringert werden. Das bedeutet, dass beispielsweise in einem Abstand bis zu 25 % des Abstandes zweier Rasterpunkte das Magnetfeld verstärkt wird, während es an einem Rasterpunkt selbst relativ klein eingestellt wird.

In bevorzugten Ausgestaltungen wird der Winkelabstand wenigstens zweier benachbarter Rasterpunkte dynamisch eingestellt. Beispielsweise kann der Winkelabstand zweier Rasterpunkte bei einer Anzahl von 4, 6, 8 oder 10 Rasterpunkten jeweils 10 oder 15° betragen, während der Winkelabstand bei nur 2 Rasterpunkten auf zum Beispiel 30° vergrößert werden kann. Grundsätzlich kann bei einer kleineren Anzahl von Rasterpunkten der relative Winkelabstand vergrößert werden, während einer größeren Anzahl von Rasterpunkten der Winkelabstand verkleinert wird.

Möglich ist es aber auch, dass - im gewissen Rahmen - ein Winkelabstand zweier Rasterpunkte verkleinert wird, wenn weniger Rasterpunkte vorgesehen sind. Beispielsweise kann bei nur 2 Rasterpunkten und somit 2 Menüpunkten auch ein relativ kleiner Winkelabstand von 15° oder dergleichen gewählt werden, während bei der Auswahl von 4 Menüpunkten bzw. bei dem dynamischen Erzeugen von 4 entsprechenden Rasterpunkten der Winkelabstand 30° betragen kann. Der Rasterabstand kann auch immer gleich sein.

In allen Ausgestaltungen ist es bevorzugt, dass die Dreheinheit im abgeschalten Zustand endlos und/oder frei drehbar ist. Möglich ist es aber auch, dass nur ein gewisser Drehwinkel von 150°, 180°, 360° oder 720° oder dergleichen möglich ist, wenn z. B. eine direkte Kabelverbindung zwischen einem gedrehten Teil und einem feststehenden Teil vorliegt.

In allen Fällen ist es auch möglich, dass im abgeschalten Zustand beispielsweise ein Dauermagnet für einen gewissen Grundwiderstand beim Drehen sorgt. Möglich ist es auch, für den abgeschalteten Zustand ein mechanisches oder permanentmagnetisches Raster vorzusehen, damit der Benutzer auch im ausgeschalteten Zustand ein haptisches Feedback bekommt. Denkbar ist es, dass bei einem mechanischen Raster dieses im normalen Betriebszustand elektronisch kompensiert wird, sodass der Benutzer im ausgeschalteten Zustand ein mechanisches Raster fühlt, welches im Betriebszustand komplett dynamisch überlagert bzw. ersetzt wird.

In allen Ausgestaltungen ist es bevorzugt, dass die Anzahl der Rasterpunkte der Anzahl der aktuell verfügbaren Menüpunkte entspricht. Das bedeutet, dass nach Auswahl eines Menüpunktes und entsprechender Ansteuerung in ein Untermenü die Anzahl der aktuell dann verfügbaren Rasterpunkte den Unterpunkten in dem dann aktuell aktiven Untermenü entspricht.

Vorzugsweise wird beim Drücken der haptischen Bedieneinrichtung und/oder der Dreheinheit ein selektierter Menüpunkt aktiviert. In allen Ausgestaltungen ist es auch möglich und bevorzugt, dass ein touchsensitiver Bildschirm bzw. eine berührungsempfindliche Anzeigeeinheit verwendet wird (wie z.B. kapazitiv, iduktiv...), bei der durch Berühren beispielsweise mit dem Finger oder dergleichen eine Auswahl eines Menüpunktes erfolgen kann. In all diesen Ausgestaltungen ist es möglich und bevorzugt, dass sowohl ein Drücken der haptischen Bedieneinrichtung als auch ein Bedienen mit dem Finger möglich ist. Dies gilt auch für das Bedienen mittels Gestensteuerung. Hierfür kann zusätzlich oder anstatt dem Bildschirm ein Gestensteuerungssensor verwendet werden.

Die Anzeigeineheit kann ein LCD, TFT, IPS, Retina, Nova, White Magic, OLED, AMOLED oder anderer Bildschirmtyp sein.

Vorzugsweise wird beim Aktivieren eines Menüpunkts ein zugehöriger Verfahrensschritt ausgeführt und/oder es wird ein zugehöriges Untermenü angezeigt und es wird die Anzahl der Rasterpunkte dynamisch an die auswählbaren Menüpunkte des Untermenüs angepasst.

Ein weiteres Verfahren dient zum Bedienen oder Steuern in oder von selbstfahrenden Fahrzeugen mit einem adaptiven haptischen Bedieneinrichtung, wobei sich die verfügbaren Menüpunkte und die Rasterpunkte der Bedieneinrichtung abhängig von einem Betriebs- oder Fahrzustand anpassen.

Dabei sind insbesondere nur noch die Menüpunkte oder Funktionen wähl- und ausführbar, welche bezogen auf den Betriebs- oder Fahrzustand (insbesondere selbstfahrend oder gefahren werden) zulässig sind. Eventuell zu einer Gefährdung oder verwirrende Menüpunkte und/oder Funktionen werden vorzugsweise ausgeblendet oder deaktiviert.

Noch ein Verfahren dient insbesondere zur Unterstützung der Rehabilitation von Personen nach Erkrankungen, wobei eine haptische Bedieneinrichtung eingesetzt wird. Dabei wird ein variabler Drehwiderstand erzeugt. Dabei kann mit der Bedieneinrichtung das Öffnen einer Tür, das Drehen eines Schalters etc. geübt werden. Der Raster und die Kraft können stufenlos angepasst werden.

In allen Varianten hat die haptische Bedieneinrichtung insbesondere unendlich viele mögliche Stellungen bzw. Raster.

Die Kombination Touchdisplay (Anzeigeeinheit) plus haptische Bedieneinrichtung (Haptikknopf) kann bei verschiedensten Anwendungen eingesetzt werden. Die gleiche Basiskonfiguration (Hardware) kann durch verschiedene Software "angepasst" werden. Z. B. kann die Bedieneinrichtung bei der Waschmaschine als Drehregler mit groben Rastern (Feinwäsche, Niedertemperatur, Vorwäsche...), bei einem Backofen mit einem stufenlosen, aber schwerer werdenden Raster zum Einstellen der Temperatur eingesetzt werden. Der Benutzer hat so bei allen Geräten eine "bekannte/gleiche" Nutzeroberfläche, aber trotzdem produktspezifische Userinterfaces. Der Hersteller hat hiermit mehr Gleichteile, was alles kostengünstiger macht.

Moderne Kameras haben viele Drehräder und Bedienknöpfe. Je nach gewähltem Programm kann mittels der haptischen Dreheinheit (Drehknopfes) durch Drücken auf das Display (oder einen Knopf) entsprechende Feineinstellungen (wie hier z. B. Blendenstufen...) verändert werden. Für Blendenstufen und Programme können angepasste Raster bzw. Rasterpunkte verwendet werden. Ein Zoom kann stufenlos mit Mittelstellung bei 50mm Brennweite und Anschlägen am Ende des Zooms betrieben werden. Eventuell kann kurz vor dem Endanschlag ein Anstieg der Betätigungskraft erfolgen.

Diese Kameras können auch über ein Mobiltelefon oder dergleichen gesteuert werden. Auch hier ist eine erfindungsgemäße Bedieneinrichtung vorteilhaft.

Die haptische Bedieneinrichtung kann auch zu einem Zeitpunkt Programmwählelement und danach das Einstellelement für das Zoom sein, jeweils mit verschiedenen Rastern.

Der Haptikraster kann auch im Multifunktions-Drehring des Gehäuses beim Objektiv eingebaut werden (Multifunktionsring bei den Kameras). Je nach Belegung des Rings ändert sich der Raster (Zoom, Blendenstufen, Verschlusszeit...).

Um Platz, Gewicht und Kosten zu sparen muss hierbei nicht der ganze Ring als MRF-Ring ausgeführt werden, sondern dieser kann über einen seitlich liegendes, über eine Verzahung oder ähnliches wirkverbunden, kleines Haptikelement nach der vorliegenden Erfindung angesteuert werden.

Menschen mit verminderter Sehleistung können durch ein entsprechendes Feedback des haptischen Bedienelements, z. B. in Form von einem Morsecode, Hilfestellung erfahren.

Ein Raumthermostatknopf kann z. B. angeben, welche Temperatur geregelt wird. Ein Impuls ist ein Grad wärmer, zwei kurze hintereinander folgende Impulse zwei Grad wärmer. Bei Drehung in die andere Richtung kann die Temperatur reduziert werden. Gleiches gilt beim Ofen, Backofen etc.

Es ist sogar quasi eine Blindenschrift mit der haptischen Bedieneinrichtung möglich. Der Drehmomentverlauf über den Drehwinkel (Drehen des haptischen Knopfes) ergibt ein Morsecode oder Blindenschrift.

Weiter kann das Wählen einer Nummer wie folgt dargestellt werden: Ziffern sind gleich der Anzahl der haptischen Impulse.

Personen nach einem Schlaganfall oder ähnlich schweren Erkrankungen/Ereignissen müssen viele Funktionen wieder erlernen. Das Öffnen einer Tür bzw. Türschlosses, das Drehen eines Schalters wie z. B. der Waschmaschine, das Schreiben etc. muss wieder gelernt und trainiert werden. Mit der adaptiven haptischen Bedieneinrichtung steht hierfür ein ideales Tool zur Verfügung. Der Raster und die Kraft bzw. das Drehmoment können stufenlos angepasst werden, ein Trainingsprogramm ist so möglich. Dies gilt nicht nur als Trainer für die Hand, sondern auch darüber hinaus (Gelenke, Finger, Beine...).

Besonders bevorzugt wird das erfindungsgemäße Verfahren mit einer erfindungsgemäßen Vorrichtung durchgeführt, wodurch sich eine besonders vorteilhafte Betriebsweise ergibt.

An der Anzeigeeinheit können nicht nur situationsbezogen relevante Daten angezeigt und eingestellt werden, sondern es können auch andere Daten wie z. B. die Uhrzeit, SMS, das Telefonbuch angezeigt werden.

Verfahren in einer Ausgestaltung, wobei die die Dreheinheit im abgeschalteten Zustand gesperrt wird und beim Ergreifen der Dreheinheit mit dem Beginn einer Drehbewegung entsperrt wird.

Verfahren in einer Ausgestaltung, wobei die die Dreheinheit im abgeschalteten Zustand entsperrt ist und beim Ergreifen der Dreheinheit mit dem Beginn einer Drehbewegung gesperrt wird.

Weitere Vorteile und Merkmale der vorliegenden Erfindung ergeben sich aus den Ausführungsbeispielen, die mit Bezug auf die beiliegenden Figuren im Folgenden erläutert werden.

In den Figuren zeigen:
- Fig. 1: einen Querschnitt durch eine erfindungsgemäße haptische Bedieneinrichtung;
- Fig. 2: ein vergrößertes Detail aus Fig. 1
- Fig. 3: eine stark schematische Ansicht des Wirkprinzips einer magnetorheologischen Übertragungsvorrichtung der haptischen Bedieneinrichtung im Querschnitt;
- Fig. 4: eine andere Ausführungsform einer erfindungsgemäßen haptischen Bedieneinrichtung;
- Fig. 5: die haptische Bedieneinrichtung nach Fig. 5 in einer leicht perspektivischen Darstellung;
- Fig. 6: eine weitere Ausführungsform einer erfindungsgemäßen haptischen Bedieneinrichtung;
- Fig. 7: noch eine Ausführungsform einer erfindungsgemäßen haptischen Bedieneinrichtung;
- Fig. 8a-81: einen Steuerungsablauf mit einer erfindungsgemäßen haptischen Bedieneinrichtung;
- Fig. 9a-c: mögliche Drehmomentverläufe über dem Drehwinkel einer erfindungsgemäßen haptischen Bedieneinrichtung;
- Fig. 10: noch eine weitere Ausführungsform einer erfindungsgemäßen haptischen Bedieneinrichtung; und
- Fig. 11: eine Ausführungsform einer verfahrbaren oder verkippbaren erfindungsgemäßen haptischen Bedieneinrichtung.

Mit Bezug auf die beiliegenden Figuren werden im Folgenden Ausführungsbeispiele von haptischen Bedieneinrichtungen 200 mit magnetorheologischen Übertragungsvorrichtungen 1 erläutert, wobei gleiche oder ähnliche Teile mit den gleichen Bezugszeichen versehen werden.

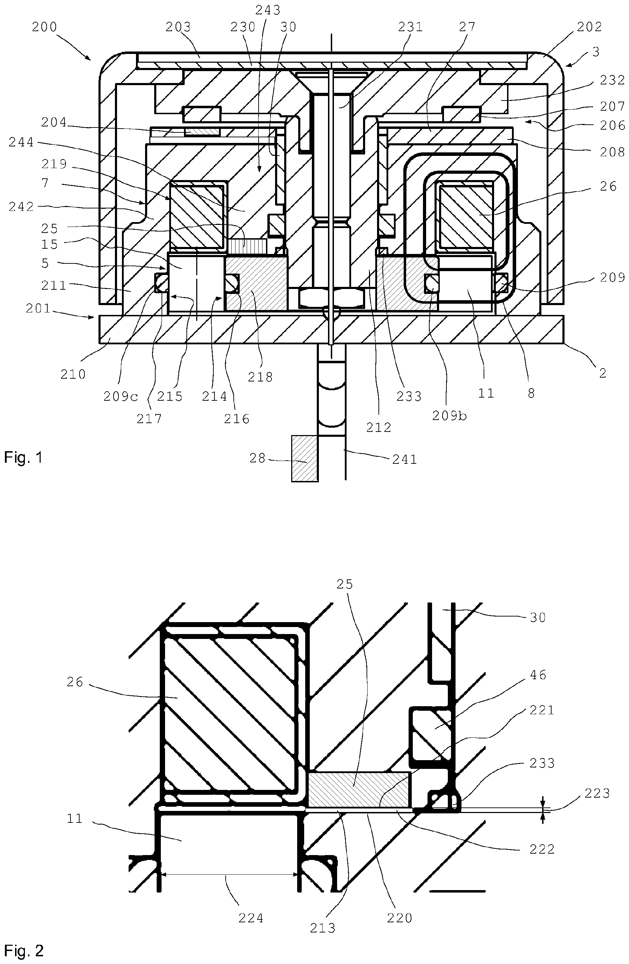

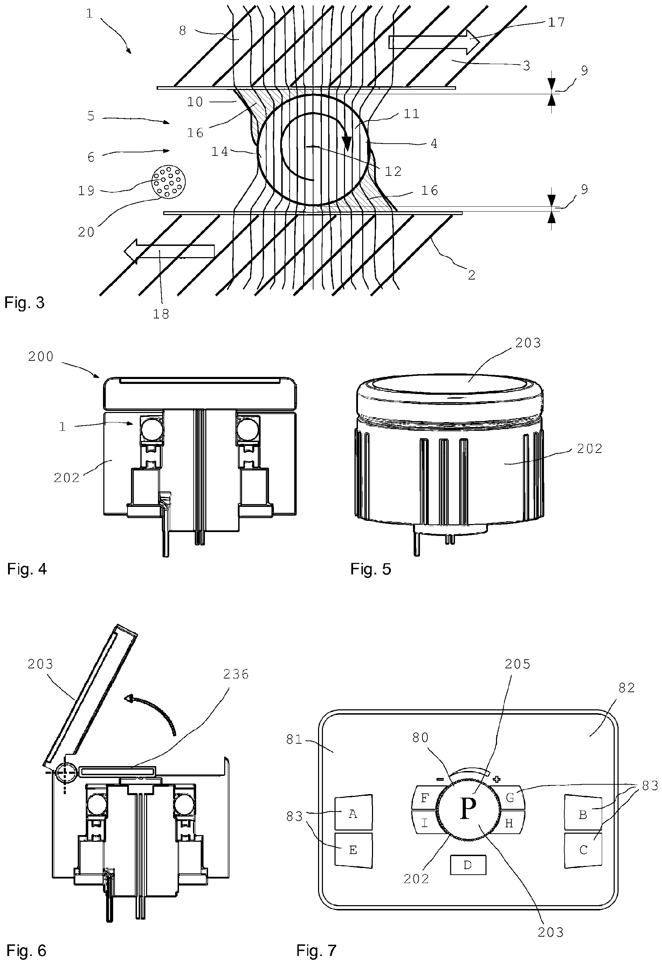

In Figur 1 ist ein schematischer Querschnitt einer ersten haptischen Bedieneinrichtung 200 abgebildet, wobei in der haptischen Bedieneinrichtung 200 eine magnetorheologische Übertragungsvorrichtung 1 enthalten ist, deren genaue Funktion weiter unten mit Bezug auf die Figur 3 erläutert wird.

Figur 1 zeigt einen Querschnitt, wobei als Komponente 2 hier der feststehende Grundkörper 201 dient, an dem als Komponente 3 die Dreheinheit 202 drehbar aufgenommen ist. Der Grundkörper 201 weist ein Aufnahmegehäuse 211 auf, welches an einer separaten Grundplatte 210 befestigt ist. Beispielsweise kann das Aufnahmegehäuse 211 nach der Montage der darin angeordneten Teile mit der Grundplatte 210 verklebt werden. Gegenüber dem Grundkörper 201 ist hier die Dreheinheit 202 drehbar aufgenommen. Die Dreheinheit 202 umfasst hier eine Welle 212 an der ein Halter 232 über eine Schraube 231 angeschraubt ist. Der Halter 232 dient zur Halterung und Aufnahme der Anzeigeeinheit 203, die von der eigentlichen Dreheinheit 202 umgeben ist. Dadurch kann die Dreheinheit 202 außen ergriffen und gedreht werden, während auf der Oberseite der haptischen Bedieneinrichtung die Anzeigeeinheit 203 im Wesentlichen vollständig sichtbar verbleibt, auch wenn die Hand des Benutzers den Drehknopf bzw. die Dreheinheit 202 dreht.

Die Welle 212 ist über ein Lager 30 drehbar an dem Aufnahmegehäuse 211 gelagert. Das Lager 30 kann beispielsweise als Gleitlager ausgeführt sein, kann aber auch ein sonstiges Wälzlager umfassen.

Im Innenraum 213 ist in dem hier rotationssymmetrischen Grundkörper 201 und genauer in dem Aufnahmegehäuse 211 ein ringförmiger Aufnahmeraum 219 vorgesehen, der hier durch eine elektrische Spule 26 als Felderzeugungseinrichtung 7 ausgefüllt ist. Eventuelle Freiräume können durch beispielsweise eine Vergußmasse oder einen Füllstoff ausgefüllt werden, der gleichzeitig dazu dient, die elektrische Spule 26 in dem ringförmigen Aufnahmeraum 219 zu halten.

Es ist möglich, wie auf der linken Seite von Figur 1 eingezeichnet, dass ein zusätzlicher Dauermagnet 25 oder mehrere zusätzliche Dauermagnete 25 an dem Aufnahmegehäuse 211 vorgesehen sind, um unabhängig von einer Stromquelle ein permanentes Magnetfeld zu erzeugen. Gegebenenfalls kann die Magnetisierung des Dauermagneten 25 über entsprechende magnetische Impulse der elektrischen Spule 26 verändert werden.

In dem Innenraum 213 zwischen dem Aufnahmegehäuse 211 und der Welle 212 ist ein Kanal 5 vorgesehen, der teilweise mit hier zylinderförmigen Drehkörpern 11 als drehbaren Übertragungselementen bzw. als Magnetfeldkonzentratoren ausgefüllt ist, die insbesondere symmetrisch über dem Umfang des Kanals 5 angeordnet sind. Die Drehkörper drehen bei der Rotation der beiden Komponenten 2, 3 gegeneinander mit, da die Drehkörper 11 regelmäßig mit dem Aufnahmegehäuse 211 und/oder der Welle 212 in Kontakt stehen und so darauf abrollen.

Zur Unterstützung des Abrollens und zur Gewährleistung eines rollenden Kontakts kann wenigstens ein Kontaktelement 209 in Form eines Kontaktrings 209 (Reibring) vorgesehen sein. Ein solcher Kontaktring kann insbesondere als O-Ring (rund oder eckig oder oder Rechteckring) ausgeführt sein und beispielsweise aus einem gummiartigen Material bestehen.

Ein derartiger Kontaktring 209 kann beispielsweise in einer umlaufenden Nut 217 auf der Lauffläche 215 des Aufnahmegehäuses 211 angeordnet sein. Möglich ist es auch, dass ein weiterer Kontaktring 209b in einer Nut 216 an der Lauffläche 214 an einem vergrößerten Umlaufring 218 der Welle 212 angeordnet ist. Der Umlaufring 218 kann einstückig mit der Welle 212 ausgebildet sein. Vorzugsweise ist der Umlaufring 218 ein separates und drehfest mit der Welle 212 verbundenes Bauteil. Vorzugsweise besteht der Umlaufring 218 aus einem gut magnetisch leitenden Material. Vorzugsweise besteht der Umlaufring 218 aus einem weichmagnetischen Material.

Möglich und bevorzugt ist es, dass ein Kontaktring 209 in der Nut 217 angeordnet ist und dass ein Kontaktring 209b in der inneren Umfangsnut 216 an der Lauffläche 214 des Umlaufrings 218 angeordnet ist.

Alternativ dazu ist es auch möglich, dass die einzelnen drehbaren Übertragungselemente bzw. Drehkörper 11 als Magnetfeldkonzentratoren jeweils mit einem Kontaktring 209c versehen sind, wobei ein Kontaktring 209c sich dann rings um einen Drehkörper 11 erstreckt. Auch bei einer solchen Ausgestaltung wird gewährleistet, dass die Drehkörper 11 bzw. deren Kontaktring 209 jeweils Kontakt zu der Welle 212 bzw. dem Aufnahmegehäuse 211 haben, sodass für eine fortlaufende Drehung der Drehkörper gesorgt wird, wenn die Dreheinheit 202 gedreht wird.

Hier im Ausführungsbeispiel wird über einen Anschlagring 233 ein definierter axialer Abstand zwischen dem Aufnahmegehäuse 211 und einer axialen Fläche des Umlaufrings 218 gewährleistet. Der Innenraum 213 wird über eine Dichtung 46 abgedichtet, sodass das magnetorheologische Medium nicht aus dem Innenraum 213 entweichen kann.

Zwischen dem Deckel bzw. dem Halter zu 232 und dem Aufnahmegehäuse 211 ist ein umlaufender Spalt vorgesehen, an dem ein als Winkelsensor dienender Sensor 206 angeordnet ist. Vorzugsweise besteht der Winkelsensor 206 aus wenigstens zwei Teilen 207 und 208, wobei das Sensorteil 207 beispielsweise an bestimmten Winkelpositionen Magnete oder andere Positionsmarken oder dergleichen aufweist, sodass über das z. B. auf der Elektronik montierte Sensorteil 208 an dem Aufnahmegehäuse 211 eine Drehbewegung der Dreheinheit 202 detektierbar ist. Dabei kann sowohl eine absolute Winkelposition als auch eine relative Winkelveränderung erfassbar sein. Mit dem Winkelsensor 206 oder mit einem separaten Betätigungssensor 204 kann eine Axialbewegung bzw. Axialkraft auf die Dreheinheit 202 oder Bedieneinrichtung 200 insgesamt erfasst werden. Beispielsweise kann durch Ausüben einer Axialkraft eine geringe Abstandsänderung zwischen dem Halter 232 und dem Aufnahmegehäuse 211 erreicht werden, die durch den Betätigungssensor 204 erfassbar ist. Möglich ist es auch, dass gewisse Teile oder der äußere Drehring der Dreheinheit 202 gegen eine Federkraft axial verschiebbar sind, sodass eine axiale Betätigung der Bedieneinrichtung 200 erfassbar ist. Die Elektronik der haptischen Bedieneinrichtung arbeitet vorzugsweise mit einem Regeltakt von 4kHz oder mehr.

Über eine Kabelzuführung 241 und einen zentralen Kanal kann die hier zusammen mit der Dreheinheit 202 drehbare Anzeigeeinheit mit den nötigen Daten und dem benötigten elektrischen Strom versorgt werden. Ein Energiespeicher 28 kann intern oder extern vorgesehen sein.

Figur 2 zeigt ein vergrößertes Detail aus Figur 1, wobei der Drehkörper 11 (in allen Ausgestaltungen können die Drehkörper 11 auch als drehbare Übertragungselemente oder als Magnetfeld konzentratoren bezeichnet werden) und die elektrische Spule 26 und auch ein Permanentmagnet 25 sichtbar sind. Deutlich erkennbar ist hier der axiale Abstand 223 zwischen der Stirnfläche 220 an der Welle 212 und der Stirnfläche 221 an dem Aufnahmegehäuse 211. Dieser axiale Abstand 223 ist erheblich geringer als der radiale Abstand 224 zwischen dem Umlaufring 218 und der Lauffläche 215 in dem Aufnahmegehäuse 211.

Ein geringer Abstand 223 ist vorteilhaft, da das Magnetfeld 8 (vergleiche Figur 1) in axialer Richtung durch den Spalt 222 durchtritt. Bei einem dünnen Spalt sind relativ geringe magnetische Verluste möglich.

Mit Bezug auf die Figur 3 wird im Folgenden das Funktionsprinzip zur Erzeugung von Momenten bei der haptischen Bedieneinrichtung 200 beschrieben.

Figur 3 zeigt eine stark schematische Querschnittsansicht einer erfindungsgemäßen magnetorheologischen Übertragungsvorrichtung 1 zur Beeinflussung der Kraftübertragung zwischen zwei Komponenten 2 und 3. Dabei ist zwischen den zwei Komponenten 2 und 3 in Fig. 1 ein Drehkörper 11 als separates Teil 4 vorgesehen. Der Drehkörper 11 ist hier als Kugel 14 ausgebildet. Möglich ist es aber ebenso, Drehkörper 11 als Zylinder oder Ellipsoide, Rollen oder sonstige rotierbare Drehkörper auszubilden. Auch im eigentlichen Sinn nicht rotationssymmetrische Drehkörper wie beispielsweise ein Zahnrad oder Drehkörper 11 mit einer bestimmten Oberflächenstruktur können als Drehkörper verwendet werden. Die Drehkörper 11 werden nicht zur Lagerung gegenüber einander eingesetzt, sondern zur Übertragung von Drehmoment.

Zwischen den Komponenten 2 und 3 der magnetorheologischen Übertragungsvorrichtung 1 ist ein Kanal 5 vorgesehen, der hier mit einem Medium 6 gefüllt ist. Das Medium ist hier ein magnetorheologisches Fluid 20, welches beispielsweise als Trägerflüssigkeit ein Öl umfasst, in dem ferromagnetische Partikel 19 vorhanden sind. Glykol, Fett, dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel in den Kanal gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße aus deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die MR-Partikel können für diesen Anwendungsfall nicht nur aus Carbonyleisenpulver (Reineisen), sondern z.B. auch aus speziellem Eisen (härterem Stahl) hergestellt werden.

Der Drehkörper 11 wird durch die Relativbewegung 17 der beiden Komponenten 2 und 3 in Rotation um seine Drehachse 12 versetzt und läuft praktisch auf der Oberfläche der Komponente 3 ab. Gleichzeitig läuft der Drehkörper 11 auf der Oberfläche der anderen Komponente 2, sodass dort eine Relativgeschwindigkeit 18 vorliegt.

Genau genommen hat der Drehkörper 11 keinen direkten Kontakt zur Oberfläche der Komponente 2 und/oder 3 und wälzt sich deshalb nicht direkt darauf ab. Der freie Abstand 9 von dem Drehkörper 11 zu einer der Oberflächen der Komponente 2 oder 3 beträgt z.B. 140 µm. In einer konkreten Ausgestaltung mit Partikelgrößen zwischen 1 µm und 10 µm liegt der freie Abstand insbesondere zwischen 75 µm und 300 µm und besonders bevorzugt zwischen 100 µm und 200 µm.

Der freie Abstand 9 beträgt insbesondere wenigstens das zehnfache des Durchmessers eines typischen mittleren Partikeldurchmessers. Vorzugsweise beträgt der freie Abstand 9 wenigstens das zehnfache eines größten typischen Partikels. Durch den fehlenden direkten Kontakt ergibt sich eine sehr geringe(s) Grundreibung/-kraft/-moment beim relativen Bewegen der Komponenten 2 und 3 zu einander.

Wird die magnetorheologische Übertragungsvorrichtung 1 mit einem Magnetfeld beaufschlagt, bilden sich die Feldlinien abhängig vom Abstand zwischen den Drehkörpern 11 und den Komponenten 2, 3 aus. Der Drehkörper besteht aus einem ferromagnetischen Material und z.B. hier aus ST 37. Der Stahltyp ST 37 hat eine magnetische Permeabilität µr von etwa 2000. Die Feldlinien treten durch den Drehkörper hindurch und konzentrieren sich in dem Drehkörper. An der hier radialen Ein- und Austrittsfläche der Feldlinien an dem Drehkörper herrscht eine hohe Flußdichte in dem Kanal 5. Das dort inhomogene und starke Feld führt zu einer lokalen und starken Vernetzung der magnetisch polarisierbaren Partikel 19. Durch die Drehbewegung des Drehkörpers 11 in Richtung auf den sich bildenden Keil in dem magnetorheologischen Fluid wird die Wirkung stark erhöht und das mögliche Brems- oder Kupplungsmoment wird extrem vergrößert weit über den Betrag hinaus, der normalerweise in dem magnetorheologischen Fluid erzeugbar ist. Vorzugsweise bestehen Drehkörper 11 und Komponente 2, 3 zumindest teilweise aus ferromagnetischem Material, weshalb die magnetische Flussdichte umso höher wird, je kleiner der Abstand zwischen Drehkörper 11 und Komponente 2, 3 ist. Dadurch bildet sich ein im Wesentlichen keilförmiger Bereich 16 im Medium aus, in welchem der Gradient des Magnetfelds zum spitzen Winkel bei der Kontaktstelle/ dem Bereich des geringsten Abstands hin stark zunimmt.

Trotz Abstand zwischen Drehkörper 11 und Komponente 2, 3 kann durch die Relativgeschwindigkeit der Oberflächen zueinander der Drehkörper 11 in eine Drehbewegung versetzt werden. Die Drehbewegung ist ohne und auch mit einem wirkenden Magnetfeld 8 möglich.

Wenn die magnetorheologische Übertragungsvorrichtung 1 einem Magnetfeld 8 einer hier in Figur 1 nicht dargestellten Magnetfelderzeugungseinrichtung 7 ausgesetzt ist, verketten sich die einzelnen Partikeln 19 des magnetorheologischen Fluides 20 entlang der Feldlinien des Magnetfeldes 8. Zu beachten ist, dass die in Figur 1 eingezeichneten Vektoren den für die Beeinflussung des MRF 20 relevanten Bereich der Feldlinien nur grob schematisch darstellen. Die Feldlinien treten im Wesentlichen normal auf die Oberflächen der ferromagnetischen Bauteile in den Kanal 5 ein und müssen vor allem im spitzwinkligen Bereich 10 nicht geradlinig verlaufen.

Gleichzeitig wird auf dem Umfang des Drehkörpers 11 etwas Material von dem magnetorheologischen Fluid 20 mit in Rotation versetzt, sodass sich ein spitzwinkliger Bereich 10 zwischen der Komponente 3 und dem Drehkörper 11 ausbildet. Auf der anderen Seite entsteht ein gleicher spitzwinkliger Bereich 10 zwischen dem Drehkörper 11 und der Komponente 2. Die spitzwinkligen Bereiche 10 können beispielsweise bei zylinderförmig ausgestalteten Drehkörpern 11 eine Keilform 16 aufweisen. Durch die Keilform 16 bedingt wird die weitere Rotation des Drehkörpers 11 behindert, sodass die Wirkung des Magnetfeldes auf das magnetorheologische Fluid verstärkt wird, da sich durch das wirkende Magnetfeld innerhalb des spitzwinkligen Bereiches 10 ein stärkerer Zusammenhalt des dortigen Mediums 6 ergibt. Dadurch wird die Wirkung des magnetorheologischen Fluids im angesammelten Haufen verstärkt (die Kettenbildung im Fluid und damit der Zusammenhalt bzw. die Viskosität), was die weitere Rotation bzw. Bewegung des Drehkörpers 11 erschwert.

Durch die Keilform 16 können wesentlich größere Kräfte oder Momente übertragen werden als es mit einem vergleichbaren Aufbau möglich wäre, der nur die Scherbewegung ohne Keileffekt nützt.

Die direkt durch das angelegte Magnetfeld übertragbaren Kräfte stellen nur einen kleinen Teil der durch die Vorrichtung übertragbaren Kräfte dar. Durch das Magnetfeld lässt sich die Keilbildung und somit die mechanische Kraftverstärkung steuern. Die mechanische Verstärkung des magnetorheologischen Effekts kann soweit gehen, dass eine Kraftübertragung auch nach Abschalten eines angelegten Magnetfeldes möglich ist, wenn die Partikel verkeilt wurden.

Es hat sich herausgestellt, dass durch die Keilwirkung der spitzwinkligen Bereiche 10 eine erheblich größere Wirkung eines Magnetfeldes 8 einer bestimmten Stärke erzielt wird. Dabei kann die Wirkung um ein Vielfaches verstärkt werden. In einem konkreten Fall wurde eine etwa zehnmal so starke Beeinflussung der Relativgeschwindigkeit zweier Komponenten 2 und 3 zueinander wie beim Stand der Technik bei MRF Kupplungen beobachtet. Die mögliche Verstärkung hängt von unterschiedlichen Faktoren ab. Gegebenenfalls kann sie durch eine größere Oberflächenrauhigkeit der Drehkörper 11 noch verstärkt werden. Möglich ist es auch, dass auf der Außenoberfläche der Drehkörper 11 nach außen ragende Vorsprünge vorgesehen sind, die zu einer noch stärkeren Keilbildung führen können.

Die Keilwirkung bzw. der Keileffekt verteilt sich flächig auf den Drehkörper 11 und die Komponenten 2 oder 3.

Figur 4 zeigt eine schematische Darstellung einer anderen Ausführungsform einer erfindungsgemäßen haptischen Bedieneinrichtung, bei der die Anzeigeeinheit 203 feststehend ausgeführt ist und bei der die axial daneben angeordnete Dreheinheit 202 verdreht werden kann, ohne dass sich die Anzeigeeinheit 203 mitdreht. Auch bei der Bedieneinrichtung 200 gemäß der Figuren 4 und 5 ist eine magnetorheologische Übertragungsvorrichtung 1 vorgesehen, um die benötigten magnetischen Kräfte und die entsprechend wirkenden Bremskräfte bzw. Bremsmomente zu erzeugen.

Figur 6 zeigt eine Variante des Ausführungsbeispiels gemäß Figur 4, wobei der Deckel mit der Anzeigeeinheit 203 abklappbar ausgeführt ist, sodass nach dem Aufklappen ein Fingerprintsensor 236 oder dergleichen (Touchpad....) zur Verfügung steht, um beispielsweise eine Authentifizierung eines Benutzers durchzuführen.

Figur 7 zeigt eine erfindungsgemäße Bedieneinrichtung 1 mit einem Bedienknopf 80 als haptischer Bedieneinrichtung 200 und mit einer Anzeige 81, von der die haptische Bedieneinrichtung 200 aus nach oben absteht. Das bedeutet, dass hier sowohl die Anzeige 81 zur Darstellung von Informationen geeignet ist als auch, dass die Anzeigeeinheit 203 auf der Oberseite der Bedieneinrichtung 200 zur Wiedergabe von Informationen und zur Auswahl von Menüpunkten dient. An dem Touchscreen 82 können Tasten 83 tatsächlich oder virtuell vorgesehen sein, die durch Drücken betätigt werden können, um bestimmte Aktionen auszulösen. Jedenfalls ist über Drehen der Dreheinheit 202 der Bedieneinrichtung 200 eine Auswahl von Menüpunkten an der Anzeigeeinheit 203 möglich.

Die Bedieneinrichtung 200 nach Fig. 7 weist einen Bedienknopf oder Drehknopf 80 mit einer magnetorheologischen Übertragungsvorrichtung 1 auf. Das Gehäuse als Komponente kann z.B. an einem Gerät fest angebracht sein. Die Welle als Komponente ist mit dem Drehteil verbunden. Beide Komponenten 2 und 3 sind über Lager gegeneinander drehbar gelagert. Ein dünner Spalt als freier Abstand 9 befindet sich zwischen dem Drehkörper 11 und dem Gehäuse und auch zwischen dem Drehkörper 11 und der Welle. Der die Drehkörper 11 umgebende Raum und gegebenenfalls nahezu der gesamte Innenraum kann mit einem magnetorheologischen Fluid als Medium 6 gefüllt sein. Ein Dichtring 46 wirkt als Dichtung gegenüber dem Lager, welches so vor den Partikeln in dem magnetorheologischen Fluid geschützt ist.

Bei Aktivierung der Spule 26 wird ein Magnetfeld 8 erzeugt, welches, wie die beispielhaft eingezeichneten Feldlinien zeigen, durch die Drehkörper 11 durchtritt und hier im Wesentlichen sonst innerhalb des Gehäuses und der Welle verläuft. Bei aktiviertem Magnetfeld der Spule 26 wird ein entsprechender Widerstand in dem Medium 6 bzw. dem MR-Fluid erzeugt, sodass beim Drehen des Drehteils 85 ein entsprechender Widerstand spürbar ist. Möglich ist auch ein z.B. zeitlich gepulster oder pulsierender Betrieb, durch den beim Drehen ein pulsierender Widerstand und somit eine Rasterung spürbar wird.

Die jeweils aktuelle Winkelposition kann über einen Drehgeber erfasst werden. Dadurch können abhängig von der Ansteuerung je nach Position, Drehwinkel, Winkelgeschwindigkeit etc. beliebige haptische Signale ausgegeben werden. Der Drehgeber kann auch um einen Drehmomentsensor ergänzt werden.

Zweidimensionale Haptikknöpfe oder Drehknöpfe 80 können auch mit einem zusätzlichen MRF Schermodus hergestellt werden.

Ein MRF Haptikknopf kann sehr kleinbauend für Stelleinrichtungen in Spiegelreflexkameras und sonstigen Fotoapparaten, sowie Spielekonsolen und sonstiger handgehaltenen Computern ausgeführt werden. Solche kleinbauende MRF Kopplungseinrichtungen sind wegen des geringen Platzbedarfs und des geringen Stromverbrauchs im Bereich von Milliwatt oder darunter für Kameras und andere Outdooranwendungen gut geeignet. Das Raster ist situationsabhängig einstellbar.

Dreidimensionale Bewegungselemente mit variabler Haptik und robuster und präziser Lagerung sind grundsätzlich schwierig herzustellen und somit nicht preisgünstig. Die Kombination z.B. einer pendelfähigen Anordnung der Drehkörper mit einer magnetorheologischen Flüssigkeit ist hingegen sehr kostengünstig herstellbar.

Auch ein vierdimensionaler Drehknopf, der z.B. in drei Richtungen verschoben und zusätzlich noch gedreht werden kann, kann zur Verfügung gestellt werden.

Die Kombination eines 3D-Knopfes mit einer Längsverstellung eines MRF-Keils ergibt so ein 4D Betätigungselement. Mit einer Felderzeugungseinheit können alle vier Bewegungsrichtungen beeinflusst bzw. variiert werden.

Der Einsatz solcher Haptikknöpfe ist auch an berührungsempfindlichen Anzeigen wie Touchdisplays in Mobiltelefonen, PDA's, Smartphones, tragbaren und stationären Computern und Bildschirmen, Spielkonsolen, TabletPC's, Laptops usw. möglich. Dazu wird dort wenigstens ein haptisches Element in Form z.B. eines Drehknopfes vorgesehen.

Ein solches Haptikelement 200 kann auch klapp-/schwenk- bzw. verschiebbar ausgeführt werden und z.B. aus einer Ruheposition am Rand in eine Position über dem Display verschoben werden. Sobald das Haptikelement über dem Display ist, kann sich die Anzeige im Display ändern, d.h. ein Menü erscheint unter oder um den Knopf herum.

Statt einem kinematischen und z.B. parallelogrammartigen Schwenkmechanismus kann auch ein elastisches/verformbares Element verwendet werden, welches z.B. als biegsamer und halbsteifer Arm aus gewendeltem Metallschlauch in Form eines Schwanenhalses bestehen kann. Ein Vorteil ist, dass der Benutzer nicht immer in den Bildschirm greifen muss, was die Verschmutzung reduziert. Außerdem geht die Verstellung und z.B. das Zoomen schneller: Mit einem Finger in den Bildschirm greifen und mit anderen Finger den Drehregler bewegen kann z.B. einen Zoomvorgang auslösen. Das gleiche gilt für die Lautstärke, das Groß-Kleinschreiben oder die Auswahl von Sondertasten oder einer zweiten Ebene beim Tippen.

So kann der Benutzer auch auf eine eigene Bedienleiste mit dem einen Finger drücken, um die Art der gewünschten Betätigung auszusuchen. Mit dem Drehregler führt er dann die gewünschte Aktion durch. Der Raster des Drehregler passt sich dann automatisch an, so z.B. "Ein"-"Aus" oder eine Lautstärkeregelung mit einem Raster evtl. mit einem dynamischem Anschlag. Wenn der Bildschirm während der Betätigung (Touchdisplay) gedreht wird (z.B. wie bei Mobiltelefonen oder handegehaltenen Computern - 90° von Hochformat auf Längsformat), dann passt sich der Raster automatisch an, d.h. er dreht sich mit. Wäre z.B. beim Hochkanthalten der Einstellbereich von 6:00 Uhr bis 12:00 Uhr, dann wäre dieser ohne Anpassung beim Drehen um 90° im Uhrzeigersinn von 12:00 Uhr bis 6:00 Uhr. Dies gilt auch, wenn das Display im Knopf selber eingebaut ist. Ein solches haptisches Element kann in alle oder einzelne Richtungen haptisch sein (nur drehen, drehen und drücken; Joystick etc.). Je nach gewählter Aktion verstellt sich die Haptik.

Ein Vorteil kann sich auch beim Auswählen von z.B. einer Liste wie einer Telefonbuchliste ergeben, da solche Einträge für große Finger oft zu klein zum "Zielen" sind.

Vorteile ergeben sich auch im Dunkeln oder für Leute mit Brille, welche diese gerade nicht tragen. Über den haptischen Drehregler erhält man eine Rückkopplung und der Benutzer weiß, was er macht, wenn es z.B. gerade dunkel ist.

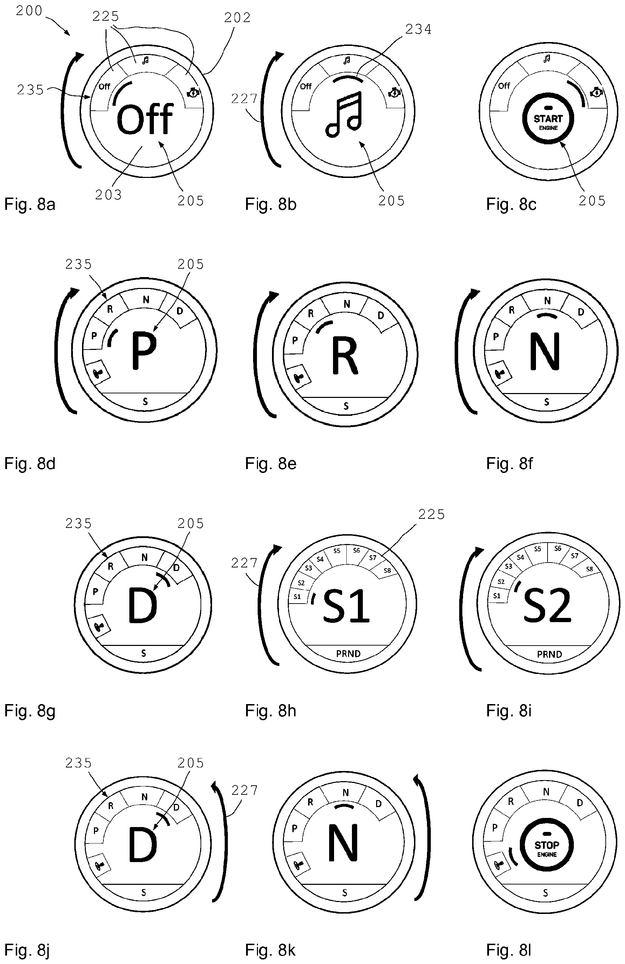

Mit Bezug auf die Figuren 8a bis 8l wird im Folgenden die Funktionsweise und die Betriebsweise einer erfindungsgemäßen Bedieneinrichtung 200 am Beispiel des Einsatzes in einem Kraftfahrzeug erläutert.

Dabei zeigt Figur 8a eine Draufsicht auf die erfindungsgemäße haptische Bedieneinrichtung 200 eines Kraftfahrzeugs. Die haptische Bedieneinrichtung 200 kann insbesondere zur Auswahl eines Betriebszustandes des Kraftfahrzeugs dienen. Setzt sich ein Benutzer in das Kraftfahrzeug und beispielsweise auf den Fahrersitz, so kann die haptische Bedieneinrichtung 200 direkt über einen nicht dargestellten Sensor die Anwesenheit des Fahrers und/oder des Schlüssels oder eines anderen geeigneten Identifikationsgegenstandes detektieren und automatisch von dem ausgeschalteten Ruhezustand in einen aktiveren Zustand überführt werden. In diesem Zustand zeigt die Anzeigeeinheit 203 der haptischen Bedieneinrichtung 200 beispielsweise den Betriebszustand des Kraftfahrzeugs an.

In Figur 8a ist der Betriebszustand "off" dargestellt. Die Anzeigeeinheit 203 zeigt zentral an der Dreheinheit 202 ein grafisches Symbol 205 mit dem Betriebszustand an. Weiter außen ist ein Menüring 235 grafisch dargestellt, an dem die einzelnen auswählbaren Menüpunkte 225 abgebildet sind. In Figur 8a sind das drei Menüpunkte, wobei der Indikator 234 neben dem gewählten Betriebszustand bzw. neben dem gerade aktiven Betriebszustand dargestellt ist.

Durch Drehen der Dreheinheit 202 in die Drehrichtung 227 (hier nach rechts bzw. im Uhrzeigersinn)) kann als nächstes der Menüpunkt zur Einstellung des Radios bzw. des Audiosystems angewählt werden. Dieser Zustand ist in Figur 8b dargestellt, wo der Notenschlüssel als grafisches Symbol 205 im Zentrum der Anzeigeeinheit 203 abgebildet ist. Der Indikator 234 zeigt an, dass der entsprechende Menüpunkt 225 aktiv ist.

Durch Weiterdrehen der Dreheinheit 202 kann schließlich die Startfunktion des Kraftfahrzeugs aktiviert werden, wie Figur 8c zeigt.
Durch Drücken der berührungsempfindlichen Oberfläche der Anzeigeeinheit 203 kann der Motor gestartet werden.

Nach dem Starten des Motors durch Betätigen der berührungsempfindlichen Schaltfläche der Anzeigeeinheit 203 und/oder durch axiales Drücken der Dreheinheit 202 bzw. der gesamten Bedieneinrichtung 200 wird der Motor gestartet, sodass sich der in Figur 8d dargestellte Zustand für ein Automatikfahrzeug ergibt. Dabei wird die Parkfunktion aktiviert, sodass das Fahrzeug nicht unabsichtlich in Bewegung versetzt wird. Unabhängig davon, wie das Auto abgestellt wurde, wird nach erneutem Start jedenfalls die Parkfunktion aktiviert, sodass eine zuverlässige Verhinderung eines unabsichtlichen Fahrens sichergestellt wird.

Das ist sehr vorteilhaft, da dazu keine mechanische Rückstellung erforderlich ist. Die haptische Bedieneinrichtung 200 erkennt zwar die Winkelposition, in der sich die Dreheinheit 202 befindet, aber diese ist nur im Betrieb nötig und sinnvoll. Nach einem erneuten Start des Fahrzeugs werden alle Einstellungen auf die Grundeinstellungen zurückgesetzt, sodass unabhängig von der Winkelposition der Dreheinheit und dem Zustand, in dem das Fahrzeug gestoppt und der Motor ausgeschaltet wird, sich nach einem erneuten Start des Motors immer der Zustand "P" ergibt.

Durch Betätigen der Dreheinheit 202 und Drehen im Uhrzeigersinn wird als nächster Rasterpunkt der Rückwärtsgang erreicht, so wie es in Figur 8e dargestellt ist. Das Drehen in die Position "N" kann hierbei blockiert werden (sehr hohes Bremsmoment), wenn z. B. nicht die Fuß- oder Feststellbremse gleichzeitig betätigt wird. Ein Weiterdrehen überführt die Dreheinheit zu dem Menüpunkt "N" (Leerlauf), wie Figur 8f zeigt.

Der nächste Rasterpunkt entspricht dem Menüpunkt "D", wie Figur 8g zeigt. Durch Betätigen der Dreheinheit 202 in axialer Richtung oder durch Drücken des berührungsempfindlichen Displays wird die Betriebsart "D" aktiviert und der Fahrer kann los fahren.

Wird hingegen der Menüpunkt "S" betätigt, wird ein Untermenü aktiviert und man erhält die Auswahlmöglichkeiten aus hier acht verschiedenen Gängen, wie es Figur 8h darstellt. Durch entsprechendes Drehen der Dreheinheit 202 kann einer der acht Gänge durch den entsprechenden Menüpunkt S1 bis S8 aktiviert werden. Hierbei kann z. B. jedem Gang ein beliebiger Raster-/Drehmomentverlauf zugeordnet werden, sodass der Bediener ohne Hinsehen die gewählte Stellung erkennt.

Eine Drehbewegung in die entgegengesetzte Richtung, also entgegen des Uhrzeigersinns, führt zurück zu den anderen Menüpunkten.

In allen Fällen ist es so, dass die Anzahl der Rasterpunkte für die Dreheinheit 202 an die Anzahl der verfügbaren Menüpunkte angepasst wird. Das bedeutet, dass in Figur 8h acht verschiedene Rasterpunkte vorgesehen sind, während in Figur 8k sechs verschiedene Menüpunkte dargestellt und angewählt werden können, wozu entsprechend sechs Rasterpunkte vorgesehen sind. Hier werden rechte und linke Endanschläge dynamisch erzeugt, sodass im eingeschalteten Zustand die Dreheinheit nicht beliebig weiter gedreht werden kann.

Wird die Dreheinheit 202, wie in Figur 8l dargestellt, zurück zum Ausgangspunkt gedreht, so wird dynamisch das Symbol für das Stoppen des Motors angezeigt. Durch Drücken auf das Symbol oder durch Betätigen der Dreheinheit 202 bzw. der Bedieneinrichtung 200 wird der Motor gestoppt und der Zustand aus Figur 8a wieder erreicht.

Der Start- oder Stopp-Knopf muss nicht zwingend an der Anzeigeinheit sein, sondern kann auch noch ein unabhängiger Knopf sein, z. B. in der Fahrzeugkonsole.

Insgesamt wird ein haptischer Drehknopf zur Verfügung gestellt, dessen haptisches Raster sich anhand der verfügbaren Menüpunkte eines Menüs orientiert. Die Erzeugung der verfügbaren Rasterpunkte erfolgt dynamisch bzw. adaptiv.

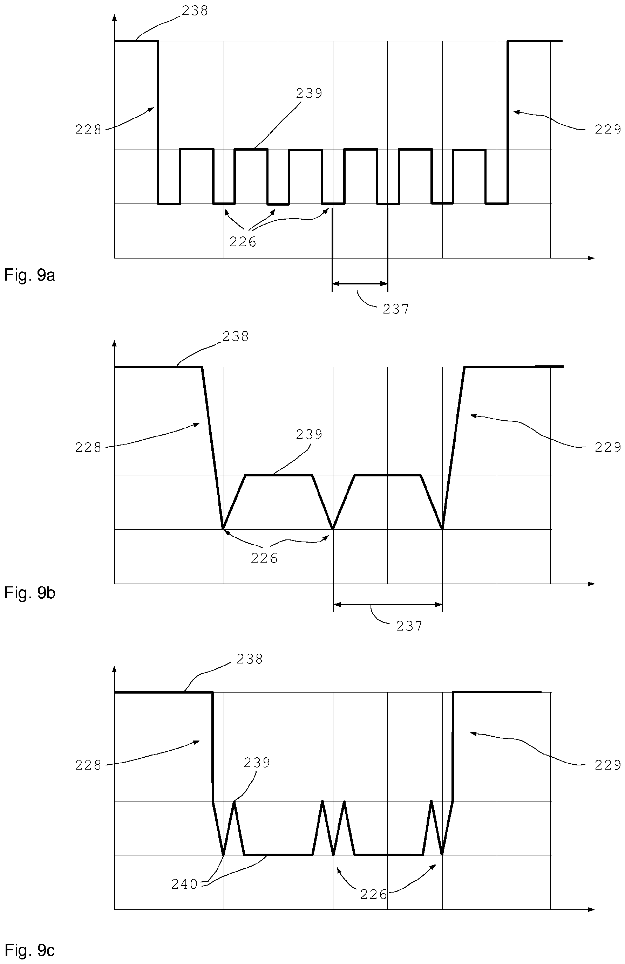

In den Figuren 9a, 9b und 9c sind mögliche Ausführungsvarianten für das dynamisch erzeugte Magnetfeld bzw. das dynamisch erzeugte Bremsmoment in Abhängigkeit von dem Drehwinkel dargestellt.

Figur 9a zeigt dabei eine Variante, bei der ein linker Endanschlag 228 und ein rechter Endanschlag 229 erzeugt werden. Bei Weiterdrehen wird dort ein hohes Magnetfeld bzw. Anschlagmoment 238 erzeugt, wodurch die Dreheinheit 202 einen hohen Widerstand gegenüber einer Drehbewegung entgegensetzt.

Direkt neben dem linken Endanschlag 228 ist ein erster Rasterpunkt 226 vorgesehen, der einem ersten Menüpunkt 225 entspricht. Soll der nächste Menüpunkt angewählt werden, so muss die Dreheinheit 202 im Uhrzeigersinn gedreht werden. Dazu muss das dynamisch erzeugte höhere Magnetfeld bzw. Rastmoment 239 bzw. dessen Reibmoment überwunden werden, bevor der nächste Rasterpunkt 226 erreicht wird. In Figur 9a wird für einen gewissen Winkelbereich jeweils an den Rasterpunkten 226 und an den dazwischenliegenden Bereichen ein jeweils konstantes Magnetfeld erzeugt, welches an den Rasterpunkten erheblich geringer ist als in den dazwischenliegenden Bereichen und nochmals deutlich geringer als an den Anschlägen 228, 229.

Ein Winkelabstand 237 zwischen einzelnen Rasterpunkten ist dynamisch veränderbar und wird an die Anzahl der zur Verfügung stehenden Rasterpunkte bzw. Menüpunkte angepasst.

Figur 9b zeigt eine Variante, bei der zu den Endanschlägen 228, 229 hin das Magnetfeld nicht schlagartig ansteigt, sondern einen steilen Verlauf nimmt. Weiterhin sind an den Rasterpunkten 226 zu beiden Drehseiten hin jeweils rampenartige Steigungen des Magnetfeldes vorgesehen, wodurch der Drehwiderstand in die entsprechenden Drehrichtungen hin zunimmt. Hier werden mit der gleichen Bedieneinrichtung 200 nur drei Rasterpunkte 226 zur Verfügung gestellt, deren Winkelabstand 237 größer ist als in dem Beispiel gemäß Figur 9a.

Figur 9c zeigt eine Variante, bei der zwischen einzelnen Rasterpunkten 226 ein geringerer Drehwiderstand vorliegt und nur direkt benachbart zu den Rasterpunkten 226 jeweils ein erhöhtes Magnetfeld 239 erzeugt wird, um ein Einrasten an den einzelnen Rasterpunkten 226 zu ermöglichen und gleichzeitig nur einen geringen Drehwiderstand zwischen einzelnen Rasterpunkten zur Verfügung zu stellen.

Grundsätzlich ist auch eine Mischung der Betriebsweisen und der Magnetfeldverläufe der Figuren 9a, 9b und 9c möglich. Beispielsweise kann bei unterschiedlichen Untermenüs eine entsprechend unterschiedliche Einstellung des Magnetfeldverlaufes erfolgen.

Wenn die Dreheinheit nicht gedreht wird, d. h. der Winkel ist konstant, wird vorzugsweise über die Zeit der Strom kontinuierlich verringert. Der Strom kann auch geschwindigkeitsabhängig (Drehwinkelgeschwindigkeit der Dreheinheit variiert werden.

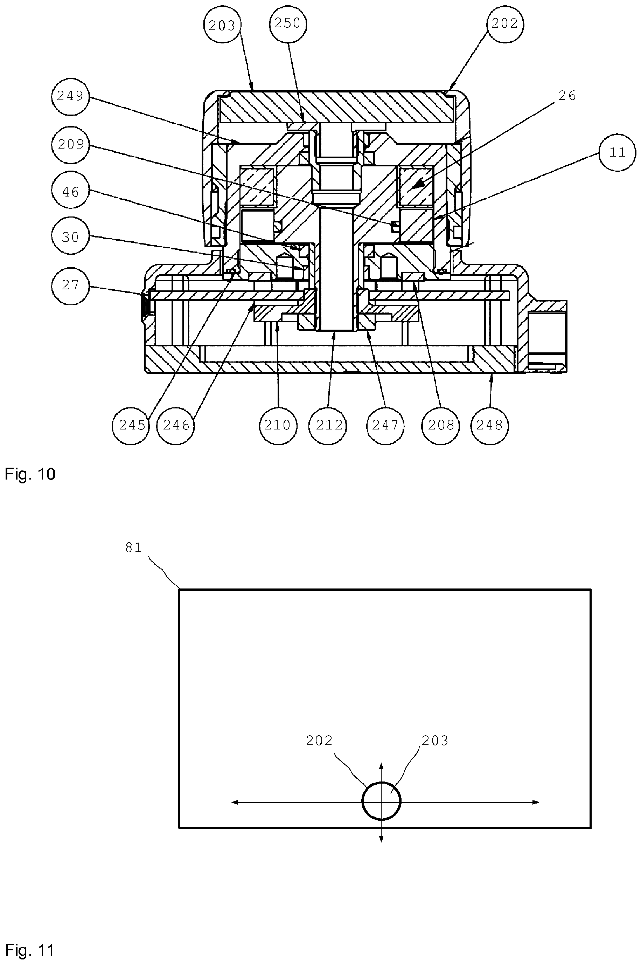

Figur 10 zeigt eine andere Ausführungsvariante der haptischen Bedieneinrichtung 200 mit einer feststehenden Anzeigeeinheit 203. Unterhalb der Anzeigeeinheit 203 ist der Uhrenteller 250 angeordnet. Das Außenteil 249 mit der hier als Aluminiumknopf ausgeführten Dreheinheit 202 ist drehbar an der Welle 212 aufgenommen. Die Drehkörper 11 sind wiederum in einem Kanal 5 und wirken als Magnetfeldkonzentratoren. Die Spule 26 dient zur Erzeugung eines Magnetfeldes. Der O-Ring 245 dichtet. Eine Distanzhülse 246 dient zur Einstellung der Distanz. Mit der Kontermutter 247 wird die Welle 212 gesichert. Die Kontermutter 247 wird nach unten hin durch den Gehäuseboden abgedeckt.

Fig. 11 zeigt ein Ausführungsbeispiel, bei dem die Bedieneinrichtung 200 in wenigstens einer Dimension verfahrbar ist. Das kann z. B. an einem Infotainmentsystem eines Kraftfahrzeuges so ausgebildet sein. Der Bedienkopf kann horizontal (und/oder) vertikal verfahrbar sein, so wie es die Pfeile in Fig. 11 andeuten. Möglich ist es auch, dass der Bedienknopf verkippbar (und gegebenenfalls nicht verfahrbar) ist. Das Verkippen kann auch in zwei oder mehr Richtungen erfolgen. Durch ein Verfahren (Verkippen) kann ein geeigneter Menüpunkt ausgewählt werden. Wenn der Bedienknopf z. B. seitlich verfahren wird, kann der jeweils nächste Menüpunkt selektiert und auf der Anzeige 81 und/oder 203 angezeigt werden. Bei dieser Ausgestaltung kann auf die Anzeige 203 verzichtet werden. Dadurch wird noch ein schnelleres Selektieren ermöglicht. Das Verfahren kann wie das Verdrehen des haptischen Knopfes auch haptisch unterlegt sein (z.B. kurzer Stopp bei den Menüpunkten). Zur Erkennung der Position kann bei Nutzung eines Touchscreens oder ähnlich berührungsempfindlichen Displays und eines über diesen hinweg fahrenden Bedienelementes der Touchscreen selber verwendet werden. Der Bedienknopf überträgt z.B. beim Verfahren die Position auf das Display, wie es ein Finger z.B. beim einem "Slider" (Entsperren eines Handys) macht. Die Verfahrposition kann aber auch über Positionselemente nach dem Stand er Technik erkannt werden (Längenmesssysteme, Bilderkennung...).

Dies gilt auch für eine (axiale) Druckfunktion (z.B. zum Bestätigen einer selektierten Auswahl). Auch hier kann der Touchscreen genutzt werden, wobei der darüber verfahrende Bedienknopf quasi der "menschliche Finger" ist.

Vorteilhaft ist diese Verfahrbarkeit auch dann, wenn z.B. bei einem Automobil zwischen selber Fahren und autonomen Fahren gewechselt wird. Beim selber Fahren wird das haptische Bedienelement als Getriebewahlhebel genutzt, beim autonomen Fahren ist diese Funktion nicht mehr notwendig und das Bedienelement kann für andere Funktionen verwendet werden. Das Bedienelement kann dann an der gleichen Position verbleiben und die neuen Funktionen übernehmen. Die ist aber evtl. für den Benutzer verwirrend, besser ist es, wenn der Knopf erst nach dem Verfahren in eine andere Position eine andere Funktion hat. So ist die Funktion des Bedienelementes auch wiederum ohne Hinsehen zuorden- und nutzbar. Das Verfahren des Bedienelementes ist hierbei kostengünstiger und platzsparender wie zwei haptische Knöpfe auszuführen (von denen einer Großteils immer ungenutzt ist)

In allen Ausgestaltungen ist eine Bewegungsmustererkennung möglich. Bewegt oder dreht der Benutzer den Bedienknopf nach einem (vorbestimmten) Muster, so wird das erkannt. Beispielsweise kann der Benutzer z. B. zweimal links und zweimal rechts mit relativ (ganz wenig) Winkel drehen. Der Sensor (Drehgeber) und die Elektronik erkennen dieses Bewegungsmuster und schalten davon abhängig eine hinterlegte Funktion, z.B. wird das gewählte (oder ein vordefiniertes) Menü danach ausgeführt (bestätigt). Weiteres Beispiel: Zweimal kurz im Uhrzeigersinn kann aber auch bedeuten, dass Menü soll um zwei Menüpunkte nach unten gehen. Das Bewegungsmuster kann beliebig vorgegeben sein oder vom Nutzer angelegt werden. Der Bedienknopf kann dies auch erlernen. Die auszuführenden Funktionen können auch vorgegeben oder vom Nutzer zugeordnet werden. Es sind viele Bewegungsmuster möglich.

Insgesamt stellt die Erfindung eine vorteilhafte haptische Bedieneinrichtung 200 und ein entsprechend vorteilhaftes Verfahren zur Steuerung beispielsweise eines Kraftfahrzeugs oder auch von Haushaltsgeräten zur Verfügung, wobei an dem haptischen Bedienknopf zentral eine Anzeigeeinheit vorgesehen ist, auf der die auswählbaren Menüpunkte angezeigt werden. Die Anzahl und Art der Rasterpunkte wird dynamisch an die Anzahl der zur Verfügung stehenden Menüpunkte angepasst.

In allen Fällen kann z. B. über eine Pulsweitenmodulation (PWM) das wirksame Moment drehzahlabhängig eingestellt werden. Große axiale und radiale Kräfte können über einen schrägen Spreizdorn erzeugt werden. Die Partikel können eine runde, stäbchenförmige oder jede andere Form haben.

Die rheologische Flüssigkeit kann aus verschiedensten Bestandteilen bestehen, welche einzeln oder in Kombination sein können: Fe, Kohlenstoffstahl, NdFeB (Neodymium), Alnico, Samarium, Cobalt, Silizium, Kohlefaser, rostfreier Stahl, Polymere, Soda-lime glass, Kalknatronglas, Keramic und nicht magnetische Metalle und dergleichen mehr. Dimorphische magnetorheologische Flüssigkeiten mit Nanotubes oder/und Nanowires sind auch möglich.

Die Trägerflüssigkeit kann insbesondere aus den folgenden Bestandteilen oder einer Kombination daraus bestehen: Öle und vorzugsweise synthetische oder nicht synthetische Öle, Hydrauliköl, Glycol, Wasser, Fette und dergleichen mehr.

Der Gegenstand dieser Erfindung wurde mehrfach als Hardware umgesetzt (z.B. Fig. 1) und hat ein gemessenes Grundmoment von ca. 0,015 Nm und ein Maximalmoment von >5 Nm (Faktor 300).

**Bezugszeichenliste:**

| | | | |
|---|---|---|---|
| 1 | Übertragungsvorrichtung, Einrichtung | 209 | Kontaktring, Reibring |
| | | 210 | Grundplatte |
| 2, 3 | Komponente | 211 | Aufnahmegehäuse |
| 4 | separates Teil | 212 | Welle |
| 5 | Kanal | 213 | Innenraum |
| 6 | Medium | 214 | Lauffläche von 212 |
| 7 | Magnetfelderzeugungseinrichtung | 215 | Lauffläche von 211 |
| | | 216 | Nut |
| 8 | Feld | 217 | Nut |
| 9 | freier Abstand | 218 | Umlaufring mit 214 und 216 |
| 10 | spitzwinkliger Bereich | 219 | Aufnahmeraum für 26 |
| 11 | Drehkörper, drehbares Übertragungselement | 220 | Stirnfläche von 218 |
| | | 221 | Stirnfläche von 211 |
| 12 | Drehachse | 222 | Spalt |
| 13 | Drehkörper | 223 | axialer Abstand |
| 14 | Kugel | 224 | radialer Abstand |
| 15 | Zylinder | 225 | Menüpunkt |
| 16 | Keilform | 226 | Rasterpunkt |
| 17 | Richtung der Relativbewegung | 227 | Drehrichtung |
| | | 228 | Endanschlag |
| 18 | Richtung der Relativbewegung | 229 | Endanschlag |
| | | 230 | Deckel |
| 19 | magnetische Partikel | 231 | Schraube |
| 20 | Fluid | 232 | Halter |
| 25 | Dauermagnet | 233 | Anschlagring |
| 26 | Spule | 234 | Indikator |
| 27 | Steuereinrichtung | 235 | Menüring |
| 28 | Energiespeicher | 236 | Fingerprintsensor |
| 30 | Lager | 237 | Winkelabstand |
| 46 | Dichtring | 238 | Anschlagmoment |
| 80 | Bedienknopf | 239 | Rastermoment |
| 81 | Anzeige | 240 | Grundmoment |
| 82 | Touchscreen | 241 | Kabel |
| 83 | Taste | 242 | äußerer Schenkel |
| 200 | Bedieneinrichtung | 243 | radial innerer Bereich |
| 201 | Grundkörper | 244 | innerer Schenkel |
| 202 | Dreheinheit | 245 | O-Ring |
| 203 | Anzeigeeinheit | 246 | Distanzhülse |
| 204 | Betätigungssensor | 247 | Kontermutter |
| 205 | grafisches Symbol | 248 | Gehäuseboden |
| 206 | Winkelsensor | 249 | Außenteil |
| 207 | Sensorteil | 250 | Uhrenteller |
| 208 | Sensorteil, Elektronik | | |

## Patentansprüche

1. Haptische Bedieneinrichtung (200) mit einem Grundkörper (201) und einer Dreheinheit (202) und einer magnetorheologischen Übertragungsvorrichtung (1) mit wenigstens zwei koppelbaren Komponenten (2, 3), deren Kopplungsintensität beeinflussbar ist, wobei zur Beeinflussung der Kopplungsintensität zwischen den koppelbaren Komponenten (2, 3) in einem Kanal (5) ein durch ein Magnetfeld (8) beeinflussbares magnetorheologisches Medium (6) mit magnetisch polarisierbaren Partikeln (19) angeordnet ist, und wobei wenigstens eine Magnetfelderzeugungseinrichtung (7) zur Erzeugung wenigstens eines Magnetfeldes (8) vorgesehen ist, um mit dem Magnetfeld (8) das magnetorheologische Medium (6) zu beeinflussen, wobei der Grundkörper (200) mit einer der beiden Komponenten (2, 3) und die Dreheinheit (202) mit der anderen der beiden Komponenten (3, 2) gekoppelt ist, wobei in dem Kanal (5) wenigstens ein drehbares Übertragungselement als Magnetfeldkonzentrator angeordnet ist, wobei das drehbare Übertragungselement bei einer Drehbewegung wenigstens einer der koppelbaren Komponenten (2, 3) in Drehung versetzt wird,
wobei eine Anzeigeeinheit (203) zugeordnet ist und wobei die Anzeigeeinheit (203) drehfest mit dem Grundkörper (201) verbunden ist und wobei die Dreheinheit (202) gegenüber der Anzeigeeinheit (203) drehbar ist.

2. Haptische Bedieneinrichtung (200) nach Anspruch 1, wobei der Grundkörper (201) eine Grundplatte (210) und ein ringförmiges Aufnahmegehäuse (211) mit einem darin angeordneten Aufnahmeraum (219) umfasst, wobei der Aufnahmeraum (219) radial nach außen durch einen sich im Wesentlichen in axialer Richtung erstreckenden äußeren Schenkel (242) des Aufnahmegehäuses (211) begrenzt wird, und wobei zentral an dem Aufnahmegehäuse (211) eine mit der Dreheinheit (202) drehfest verbundene Welle (212) drehbar aufgenommen ist, und wobei in dem Aufnahmeraum (219) eine elektrische Spule (26) aufgenommen ist,
und wobei sich in einem radial inneren Bereich (243) an das Aufnahmegehäuse (211) durch einen dünnen axialen Spalt (222) getrennt ein mit der Welle (212) drehfest verbundener Umlaufring (218) anschließt, und wobei der Kanal (5) in dem Aufnahmeraum (219) angeordnet ist und radial nach außen durch den äußeren Schenkel (242) und radial nach innen im Wesentlichen durch den Umlaufring (218) begrenzt wird, sodass ein wesentlicher Teil des Magnetfeldes der Magnetfelderzeugungseinrichtung (7) durch das Aufnahmegehäuse, den Kanal (5) und den Umlaufring (218) verläuft.

3. Haptische Bedieneinrichtung (200) nach Anspruch 2, wobei das Aufnahmegehäuse (211) in dem radial inneren Bereich (243) einen inneren Schenkel (244) umfasst, an den sich durch den dünnen axialen Spalt (222) getrennt der Umlaufring (218) anschließt und wobei ein radialer Querschnitt des Aufnahmegehäuses (211) etwa U-förmig gestaltet ist und zwischen dem inneren und dem äußeren Schenkel den Aufnahmeraum (219) umfasst, wobei der äußere Schenkel (242) länger als der innere Schenkel (244) ausgebildet ist und/oder wobei in einem zentralen Durchgang an dem inneren Schenkel (244) die Welle (212) aufgenommen ist und wobei in dem Aufnahmeraum (219) zwischen dem inneren und äußeren Schenkel die elektrische Spule (26) aufgenommen ist.

4. Haptische Bedieneinrichtung (200) nach einem der beiden vorhergehenden Ansprüche, wobei der innere Schenkel durch den dünnen axialen Spalt (222) von dem mit der Welle (212) verbundenen Umlaufring (218) getrennt ist und insbesondere wobei der Umlaufring (218) aus einem weichmagnetischen Material und die Welle (212) eine gehärtete Oberfläche oder Oberflächenbeschichtung aufweist.

5. Haptische Bedieneinrichtung (200) nach einem der vorhergehenden Ansprüche, wobei die Dreheinheit (202) die Anzeigeeinheit (203) wenigstens abschnittsweise umgibt.

6. Haptische Bedieneinrichtung (200) nach einem der vorhergehenden Ansprüche, wobei an dem Grundkörper (201) und/oder der Dreheinheit (202) ein Betätigungssensor (204) zur Erfassung eines axialen Betätigungswegs angeordnet ist und wobei der Betätigungssensor (204) insbesondere einen Abstand zwischen dem Grundkörper (201) und der Dreheinheit (202) erfasst.

7. Haptische Bedieneinrichtung (200) nach mindestens einem der Ansprüche 2 bis 4, wobei in dem Kanal (5) wenigstens eine Mehrzahl an als Drehkörpern (11) ausgebildeten drehbaren Übertragungselementen vorgesehen ist und wobei der Grundkörper (201) und die Welle (212) benachbart zu der Grundplatte (210) jeweils eine umlaufende Lauffläche (214, 215) für die drehbaren Übertragungselemente (11) aufweisen und insbesondere wobei die elektrische Spule (26) im Wesentlichen axial benachbart zu den drehbaren Übertragungselementen (11) angeordnet ist und wobei die drehbaren Übertragungselemente axial zwischen der elektrischen Spule (26) und der Grundplatte angeordnet sind.

8. Haptische Bedieneinrichtung (200) nach dem vorhergehenden Anspruch, wobei wenigstens eine Lauffläche (214, 215) wenigstens eine umlaufende Nut (216, 217) für die drehbaren Übertragungselemente (11) aufweist und/oder wobei die Lauffläche (214) der Welle (212) an dem Umlaufring (218) mit vergrößertem Durchmesser ausgebildet ist und insbesondere wobei das Aufnahmegehäuse (211) und der Umlaufring (218) aus einem besser magnetisch leitenden Material bestehen als die Grundplatte (210) .

9. Verfahren zum Bedienen von technischen Einrichtungen, Geräten und insbesondere Fahrzeugen, wobei eine haptische Bedieneinrichtung (200) mit einer Dreheinheit (202) und einem Grundkörper (201) verwendet wird und auf einer drehfest mit dem Grundkörper verbundenen Anzeigeeinheit (203) auswählbare Menüpunkte (225) angezeigt werden und wobei durch Drehen der Dreheinheit (202) ein Menüpunkt (225) selektiert wird, und wobei die Dreheinheit (202) beim Drehen an einer Anzahl von haptisch fühlbaren Rasterpunkten (226) rastet,
**dadurch gekennzeichnet,**
**dass** die Anzahl der haptisch fühlbaren Rasterpunkte (226) dynamisch verändert wird.

10. Verfahren nach dem vorhergehenden Anspruch, wobei der Drehmomentverlauf beim Drehen der Dreheinheit dynamisch verändert wird und/oder wobei die Dreheinheit (202) im abgeschalten Zustand endlos und/oder frei drehbar ist.

11. Verfahren nach einem der beiden vorhergehenden Ansprüche, wobei die Rasterpunkte (226) durch gezieltes Erzeugen eines Magnetfeldes (8) an einem wenigstens teilweise mit einem magnetorheologischen Medium (6) gefüllten Kanal (5) erzeugt werden
und wobei eine Winkelstellung (227) der Dreheinheit (202) detektiert wird und wobei in Abhängigkeit von der detektierten Winkelstellung (227) eine Intensität des Magnetfeldes (8) eingestellt wird
und wobei ein Rasterpunkt (226) an einer bestimmten Winkelposition dadurch erzeugt wird, dass an Winkelstellen benachbart zu der bestimmten Winkelposition ein stärkeres Magnetfeld erzeugt wird als an der für den Rasterpunkt (226) bestimmten Winkelposition
und insbesondere wobei ein Winkelabstand (237) wenigstens zweier benachbarter Rasterpunkte dynamisch eingestellt wird und/oder wobei in wenigstens einer Drehrichtung (227) ein Endanschlag (228, 229) dynamisch erzeugt wird, wobei an dem Endanschlag (228, 229) das Magnetfeld (8) erheblich stärker eingestellt wird als an einem Rasterpunkt (226).

12. Verfahren nach einem der dreivorhergehenden Ansprüche, wobei die Anzahl der Rasterpunkte der Anzahl der aktuell verfügbaren Menüpunkte entspricht.

13. Verfahren nach einem der vier vorhergehenden Ansprüche, wobei beim Drücken der haptischen Bedieneinrichtung (200) und/oder der Dreheinheit (202) ein selektierter Menüpunkt aktiviert wird und wobei insbesondere beim Aktivieren eines Menüpunkts ein zugehöriger Verfahrensschritt ausgeführt oder ein zugehöriges Untermenü angezeigt und die Anzahl der Rasterpunkte dynamisch an die auswählbaren Menüpunkte des Untermenüs angepasst wird.

14. Verfahren insbesondere nach einem der fünfvorhergehenden Ansprüche zum Bedienen oder Steuern in oder von selbstfahrenden Fahrzeugen mit einer adaptiven haptischen Bedieneinrichtung (200), **dadurch gekennzeichnet, dass** sich die verfügbaren Menüpunkte und die Rasterpunkte der Bedieneinrichtung (200) abhängig von einem Betriebs- oder Fahrzustand anpasst.

15. Verfahren nach dem vorhergehenden Anspruch, **dadurch gekennzeichnet, dass** nur noch die Menüpunkte wähl- und ausführbar sind, welche bezogen auf den Betriebs- oder Fahrzustand zulässig sind und/oder zu keiner Gefährdung führen.
